(19) Europäisches Patentamt
European Patent Office
Office européen des brevets

(11) EP 3 258 198 A1

(12) **EUROPÄISCHE PATENTANMELDUNG**

(43) Veröffentlichungstag:
**20.12.2017 Patentblatt 2017/51**

(21) Anmeldenummer: **16174566.6**

(22) Anmeldetag: **15.06.2016**

(51) Int Cl.:
***F26B 3/06*** *(2006.01)* ***F26B 17/12*** *(2006.01)*
***F26B 21/06*** *(2006.01)* ***B29B 13/06*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Gerresheimer Regensburg GmbH**
**93047 Regensburg (DE)**

(72) Erfinder:
- **ZIMMERER, Stehphan**
  **92723 Gleiritsch (DE)**
- **ZENGER, Tobias**
  **92533 Wernberg-Köblitz (DE)**

(74) Vertreter: **Reichert & Lindner Partnerschaft Patentanwälte**
**Bismarckplatz 8**
**93047 Regensburg (DE)**

Bemerkungen:
Geänderte Patentansprüche gemäss Regel 137(2) EPÜ.

(54) **STEUERUNG UND COMPUTERPROGRAMMPRODUKT FÜR EINE ANLAGE ZUM ENTFEUCHTEN VON SCHÜTTGUT**

(57) Es ist eine Steuerung und ein Computerprogrammprodukt für eine Anlage (100) zum Entfeuchten von Schüttgut (20) aus Kunststoff offenbart. Die Anlage (100) umfasst mindestens einen Trocknungstrichter (10, $10_1$, $10_2$, ... $10_N$), wobei jeder Trocknungstrichter (10, $10_1$, $10_2$, ... $10_N$) mit einer ersten Leitung (11) für eine Zufuhr von getrocknetem Gas und mit einer zweiten Leitung (12) für eine Ableitung von mit Feuchtigkeit beladenem Gas aus dem mindestens einen Trocknungstrichter (10, $10_1$, $10_2$, ... $10_N$) versehen ist. Mittels mehrerer Sensoren ($2_T$, 6, 7) werden verschiedene Betriebszustände des mindestens einen Trocknungstrichters ($10_1$, $10_2$,..., $10_N$) der Anlage (100) durch den Computer (3) erfasst. Mittels einer detaillierte Überwachungsseite (70) ist ein Betriebszustand eines ausgewählten Trocknungstrichters anhand der Daten von mehreren Sensoren ($2_T$, 6, 7) und anhand der Daten von mehrerer Aktuatoren (2, $4_A$, 13, 15) visualisierbar.

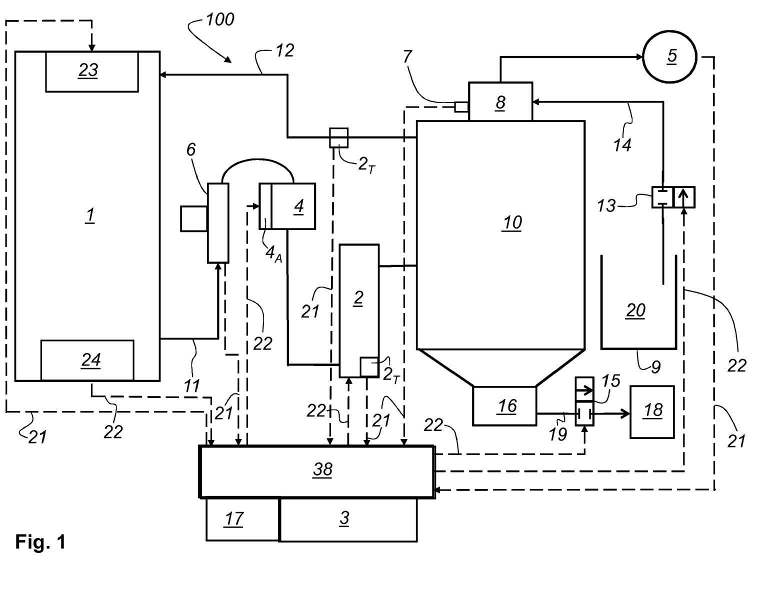


Fig. 1

EP 3 258 198 A1

Printed by Jouve, 75001 PARIS (FR)

## Beschreibung

Die Erfindung betrifft eine Steuerung für eine Anlage zum Entfeuchten von Schüttgut. Die Anlage, bei der die Steuerung zum Entfeuchten von Schüttgut aus Kunststoff eingesetzt wird, umfasst mindestens einen Trocknungstrichter. Jeder Trocknungstrichter ist mit einer ersten Leitung für eine Zufuhr von getrocknetem Gas und mit einer zweiten Leitung für eine Ableitung von mit Feuchtigkeit beladenem Gas aus dem mindestens einen Trocknungstrichter versehen. Eine Heizung ist in der ersten Leitung-jedem Trocknungstrichter vorgeordnet.

Ferner betrifft die Erfindung ein Computerprogrammprodukt für eine Anlage zum Entfeuchten von Schüttgut, insbesondere von Schüttgut aus Kunststoff. Das Computerprogrammprodukt ist auf einem nicht-flüchtigen und computerlesbaren Medium bereitgestellt und veranlasst einen Computer für eine Anlage zum Entfeuchten von Schüttgut, insbesondere von Schüttgut aus Kunststoff, eine Steuerung der Anlage auszuführen.

Die deutsche Patentanmeldung DE 197 19 483 A1 offenbart eine Trocknungsanlage, die einen Trockenlufterzeuger hat, der über eine Zuführleitung für Trockenluft mit einem Trockentrichter zur Aufnahme von zu trocknendem Material verbunden ist. Der Trockentrichter ist mit dem Trockenlufterzeuger über eine Rückführleitung für die mit Feuchtigkeit beladene Trockenluft verbunden. Die Anlage hat ferner eine Fördereinrichtung zum Transport des zu trocknenden Materials zum Trockentrichter. Um die Trocknungsanlage so auszubilden, dass die dem Trockentrichter zugeführte Trockenluftmenge entsprechend dem jeweiligen Materialdurchsatz zugeführt wird, wird der Materialdurchsatz des Trockentrichters erfasst und als Messgröße einer Steuerung zugeführt, in der als weitere Messgröße die Art des zu trocknenden Materials eingebbar ist. Die Steuerung ermittelt aus diesen Messgrößen Trocknungsparameter, die als Ausgangssignale zur weiteren Verarbeitung zur Verfügung stehen. Mit der Trocknungsanlage wird dem Trockentrichter die für das zu trocknende Material optimale Trockenluftmenge zugeführt.

Die deutsche Offenlegungsschrift DE 39 29 858 A1 offenbart ein Verfahren zum Trocknen von Schüttgut, bei dem in einem geschlossenen Luftkreislauf trockene erwärmte Luft mittels eines Gebläses durch das Schüttgut bewegt wird, um dem Schüttgut Feuchtigkeit zu entziehen. Die feuchtigkeitsbeladene Abluft aus dem Schüttgutbehälter wird wieder getrocknet, mittels einer Heizeinrichtung aufgeheizt und dann erneut dem Schüttgutbehälter zugeführt. Die dem Schüttgutbehälter zugeführte Luftmenge wird in Abhängigkeit von dem Schüttgutdurchsatz gesteuert, wobei der Schüttgutdurchsatz nur durch Zyklen des Fördertrichters oder der Verarbeitungsmaschine erfasst wird. Dies ist jedoch zu ungenau und führt auch dazu, dass nicht den Verarbeitungsparametern entsprechend getrocknetes Schüttgut zur Verarbeitung gelangt.

Das europäische Patent EP 2 186 613 offenbart eine Anlage zum Entfeuchten und/oder Trocknen von Kunststoffmaterialien. Die Anlage umfasst einen Prozessfluidgenerator und mindestens einen Trichter für Kunststoffmaterial, innerhalb welchem das Prozessfluid eingeführt wird. Ventile werden eingestellt, um die Fluidströmungsrate des Prozesses zu steuern. Sensoren sind zum Messen der Fluidströmungsrate vorgesehen. Eine elektronische Steuereinheit dient zur Steuerung der Materialmenge zu den Trichtern und der Durchflussrate des Prozessfluids aus dem Generator in die jeweiligen Trichter.

Der Erfindung liegt die Aufgabe zugrunde, eine Steuerung für eine Anlage zum Entfeuchten von Schüttgut zu schaffen, mit der automatisch eine sichere und definierte Einstellung eines Soll-Feuchtegehalts für das zu verarbeitende Schüttgut erzielt und sichergestellt werden kann. Ferner soll ein Benutzer der Anlage auf einfache Weise über den Zustand der Anlage und deren einzelner Bestandteile informiert werden können.

Diese Aufgabe wird durch eine Steuerung für eine Anlage zum Entfeuchten von Schüttgut aus Kunststoff gelöst, die die Merkmale des Anspruchs 1 umfasst.

Der Erfindung liegt ferner die Aufgabe zugrunde, ein Computerprogrammprodukt zu schaffen, mit dem eine sichere und definierte Einstellung eines Soll-Feuchtegehalts für das zu verarbeitende Schüttgut in einer Anlage zum Entfeuchten von Schüttgut erzielt und sichergestellt werden kann. Es soll nur Schüttgut zur Verarbeitung freigegeben werden, das den für die Verarbeitung erforderlichen und vorgegebenen Feuchtegehalt aufweist.

Diese Aufgabe wird durch ein Computerprogrammprodukt gelöst, das die Merkmale des Anspruchs 8 umfasst.

Die erfindungsgemäße Steuerung für eine Anlage zum Entfeuchten von Schüttgut umfasst zum Entfeuchten mindestens einen Trocknungstrichter. Jeder Trocknungstrichter ist mit einer ersten Leitung für eine Zufuhr von getrocknetem Gas und mit einer zweiten Leitung für eine Ableitung von mit Feuchtigkeit beladenem Gas aus dem mindestens einen Trocknungstrichter versehen. Eine Heizung ist in der ersten Leitung jedem Trocknungstrichter vorgeordnet, so dass damit die Temperatur des dem Trocknungstrichter zugeführten Gases eingestellt werden kann. Die Steuerung umfasst einen Computer mit einer zugeordneten Datenbank, wobei dem Computer ein Display zugeordnet ist. Auf dem Display wird eine Überwachungsseite dargestellt, die mehrere Trocknungstrichter schematisch zeigt. Der von der Steuerung ermittelte jeweilige Status der dargestellten Trocknungstrichter ist mit einer farblichen Kennzeichnung auf dem Display jedem dargestellten Trocknungstrichter zugeordnet und visualisiert. Über eine detaillierte Überwachungsseite wird ein Betriebszustand eines ausgewählten Trocknungstrichters anhand der Daten von mehreren Sensoren, die über eine erste Kommunikationsverbindung mit dem Computer sendend verbunden sind und anhand der Daten mehrerer Aktuatoren, die über eine zweite Kommunikationsverbindung mit dem Computer empfangend verbunden sind, visualisiert.

Einer der Sensoren ist ein Temperatursensor, der der Heizung zugeordnet ist und die Temperatur des dem jeweiligen Trocknungstrichters über die erste Leitung zugeführten Gases bestimmt. Einer der Sensoren ist ein Durchflusssensor, der die dem jeweiligen Trocknungstrichter über die erste Leitung zugeführte Gasmenge bestimmt. Einer der Sensoren ist ein Füllstandsensor, der einem Materialabscheider des jeweiligen Trocknungstrichters zugeordnet ist und eine komplette Befüllung des Materialabscheiders bestimmt.

Die Temperatur der den Trocknungstrichtern zur Entfeuchtung zugeführten Luft wird gemäß einer möglichen Ausführungsform von zwei Temperaturfühlern gemessen. Dies dient zur Sicherheit, falls ein Temperaturfühler ausfallen würde. Die Messwerte der Temperaturfühler werden unmittelbar mit dem Computer verarbeitet. Abweichungen werden hier durch geregeltes Zu- bzw. Abschalten der den Trocknungstrichtern zu- und vorgeordneten Heizung geregelt. Findet über den Zeitraum der minimalen Trocknungszeit kein Fördervorgang aus dem Trocknungstrichter statt, so wird durch den Computer die Solltemperatur reduziert, um eine Übertrocknung des Schüttguts im Trocknungstrichter zu verhindern.

Einer der Aktuatoren ist eine Heizung, die auf Anforderung vom Computer die Temperatur des dem jeweiligen Trocknungstrichters über die erste Leitung zugeführten Gases einstellt. Ein weiterer der Aktuatoren ist ein Aktuator für eine Stellklappe, die auf Anforderung vom Computer automatisch verstellbar ist, um eine dem jeweiligen Trocknungstrichter über die erste Leitung zugeführte Gasmenge zu regulieren. Einer der Aktuatoren ist ein steuerbares Ventil, das in einer Materialleitung von einem Reservoir für das Schüttgut zum Materialabscheider vorgesehen und vom Computer steuerbar ist. Ferner ist einer der Aktuatoren ein steuerbares Ventil, das in einer Materialleitung von einem Materialabsaugkasten des jeweiligen Trocknungstrichters zu einem Verbraucher für das Schüttgut vorgesehen und vom Computer steuerbar ist.

Mindestens eine Unterdruckpumpe ist mit dem Materialabscheider eines jeden Trocknungstrichters über eine Unterdruckleitung fluid verbunden. Dabei ist der Materialabscheider über eine Materialleitung mit mindestens einem der Reservoirs für Schüttgut verbunden. Mittels dem steuerbaren Ventil ist über die zweite Kommunikationsverbindung durch den Computer der Transport von Schüttgut in den Trocknungstrichter steuerbar.

Die erste Leitung für eine Zufuhr von getrocknetem Gas zu mindestens einem Trocknungstrichter und die zweite Leitung für die Ableitung von mit Feuchtigkeit beladenem Gas aus dem mindestens einen Trocknungstrichter sind mit mindestens einem Trockengaserzeuger verbunden. Dem Trockengaserzeuger sind ein steuerbares Gebläse und ein Taupunktsensor zugeordnet und der Computer ist über eine erste Kommunikationsverbindung mit dem Gebläse und der Taupunktsensor ist über die zweite Kommunikationsverbindung mit dem Computer verbunden.

Mittels des Computers ist über eine Zeitdauer der Öffnung des Aktuators, der ein steuerbares Ventil zu einem Verbraucher ist, die Menge des aus einem Materialabsaugkasten des jeweiligen Trocknungstrichters entnommenen Schüttguts bestimmbar. Eine der entnommenen Schüttgutmenge entsprechende Menge an Schüttgut wird über den Materialabscheider dem jeweiligen Trocknungstrichter zugeführt, so dass der Trocknungstrichter immer komplett befüllt ist.

Mit dem Computer sind ein Zeitpunkt der Befüllung einer jeden Schicht im jeweiligen Trocknungstrichter und eine Verweildauer der einzelnen Schichten im jeweiligen Trocknungstrichter protokollierbar. Fehlerzeiten sind mit der Verweildauer der einzelnen Schichten verrechenbar, so dass das steuerbare Ventil zum Verbraucher freigebbar ist, wenn eine unterste Schicht im jeweiligen Trocknungstrichter die für die Entfeuchtung erforderliche Verweildauer aufweist und dabei einer erforderlichen Soll-Gasmenge zum Entfeuchten ausgesetzt war.

Der Materialabscheider eines jeden Trocknungstrichters weist eine in den jeweiligen Trocknungstrichter schwenkbare Materialklappe auf, über die das jeweilige Schüttgut in den jeweiligen Trocknungstrichter verbracht werden kann.

Das erfindungsgemäße Computerprogrammprodukt ist auf einem nicht-flüchtigen und computerlesbaren Medium bereitgestellt und mittels dem Computerprogrammprodukt wird ein Computer veranlasst, eine Anlage zum Entfeuchten von Schüttgut, insbesondere von Schüttgut aus Kunststoff, zu steuern. Mittels mehrerer Sensoren werden verschiedene Betriebszustände mindestens eines Trocknungstrichters der Anlage durch den Computer erfasst. Mittels mehrerer Aktuatoren werden Einstellungen der Anlage durch den Computer vorgenommen. Der Computer zeichnet den zeitlichen Verlauf der verschiedenen Betriebszustände und einen zeitlichen Verlauf der Trocknungsparameter für das Schüttgut im jeweiligen Trocknungstrichter auf. Der Computer protokolliert anhand der vorgenommen Einstellungen einen Zeitpunkt der Befüllung einer jeden Schicht in dem jeweiligen Trocknungstrichter und eine Verweildauer der einzelnen Schichten im jeweiligen Trocknungstrichter. Der Computer ermittelt anhand des zeitlichen Verlaufs der Trocknungsparameter und der Verweildauer der einzelnen Schichten im jeweiligen Trocknungstrichter, ob eine für das Schüttgut vorgegebene Soll-Trocknungsdauer erreicht ist. Ist die Soll-Trocknungsdauer erreicht, wird für das Schüttgut eine Freigabe zu einem Verbraucher erteilt.

Gemäß einer bevorzugten Ausführungsform ist einer der Sensoren ein Temperatursensor einer Heizung. Mit dem Sensor wird die Temperatur eines dem jeweiligen Trocknungstrichter zugeführten Gases bestimmt. Einer der Sensoren kann ein Durchflusssensor sein, mit dem eine dem jeweiligen Trocknungstrichter zugeführte Gasmenge bestimmt wird. Ferner kann einer der Sensoren ein Füllstandsensor sein, der einem Materialabscheider des jeweiligen Trocknungstrichters zugeordnet ist. Mit dem Füllstandsensor wird die Befüllung des Materialabscheiders bestimmt. Die Menge der Befüllung ist bei jedem Füllvorgang gleich.

Gemäß einer Ausführungsform ist einer der Aktuatoren eine Heizung, die vom Computer zum An- oder Abschalten angesteuert wird, wenn die bestimmte Temperatur des zugeführten Gases außerhalb eines definierten Toleranzbereichs von einer Soll-Temperatur liegt. Ferner ist einer der Aktuatoren ein Aktuator für eine automatisch verstellbare Stellklappe, die vom Computer angesteuert wird, um eine mindestens einem Trocknungstrichter zugeführte Gasmenge in Abhängigkeit der den restlichen Trocknungstrichtern zugeführten Gasmenge zu regulieren. Einer der Aktuatoren kann ein steuerbares Ventil sein, das in einer Materialleitung von einem Reservoir für das Schüttgut zum Materialabscheider vorgesehen ist und vom Computer gesteuert wird. Ebenso ist einer der Aktuatoren ein steuerbares Ventil, das in einer Materialleitung von einem Materialabsaugkasten des jeweiligen Trocknungstrichters zu einem Verbraucher für das Schüttgut vorgesehen und vom Computer steuerbar ist.

Einige der Trocknungstrichter können vom Computer in einen Standby-Modus gefahren werden. Dabei bedeutet "einige", dass das auf dem Computer implementierte Computerprogrammprodukt die Anzahl derjenigen Trocknungstrichter für den Standby-Modus auswählt, aus denen für eine bestimmte Zeitspanne kein Förderzyklus stattgefunden hat. Der Standby-Modus wird dann aktiviert, wenn durch die durch den Aktuator automatisch eingestellte Stellung der Stellklappen und der Temperatur der Heizungen in der ersten Leitung zu den jeweils anderen Trocknungstrichtern, die Gasmenge und die Temperatur nicht ausreichen, um eine Entfeuchtung des Schüttguts im jeweils bevorzugten Trocknungstrichter in einer bestimmten Zeit zu erreichen.

Ebenfalls kann zur Energieeinsparung ein Trocknungstrichter in einen Standby-Modus gefahren werden. Dies kann z. B. der Fall sein, wenn der Trocknungstrichter längere Zeit nicht mehr aktiv gewesen ist. Ein Standby-Modus ist auch denkbar, wenn die automatisch eingestellte Stellung der Stellklappen und die Temperatur der Heizungen in der ersten Leitung zum jeweils anderen Trocknungstrichter so sind, dass die Gasmenge und die Temperatur nicht ausreichen, um eine Entfeuchtung des Schüttguts im jeweils anderen Trocknungstrichter der Anlage zu erreichen.

In der Materialleitung vom Reservoir zum Materialabscheider ist das steuerbare Ventil vorgesehen, das durch den Computer gesteuert wird, damit die Förderung des Schüttguts freigegeben oder unterbunden werden kann. Ferner ist in der Materialleitung vom Materialabsaugkasten zum Verbraucher das steuerbare Ventil vorgesehen, das ebenfalls durch den Computer gesteuert werden kann. Mit dem steuerbaren Ventil kann die Förderung des Schüttguts freigegeben oder unterbunden werden. Dies ist z.B. der Fall, wenn von dem Computerprogrammprodukt festgestellt wird, dass die noch verbleibende Trocknungszeit für eine noch im Trocknungstrichter befindliche unterste Schicht des Schüttguts nicht ausreicht, um einen Soll-Feuchtegehalt des Schüttguts der untersten Schicht einzustellen. Ein Durchsatz an Schüttgut aus dem jeweiligen Trocknungstrichter zum zugeordneten Verbraucher kann auch berechnet werden. Vom Computer wird dann das Ventil in der Materialleitung vom Materialabsaugkasten zum Verbraucher unterbrochen, wenn die noch verbleibende Trocknungszeit für die noch im Trocknungstrichter befindliche, unterste Schicht des Schüttguts nicht ausreicht, um einen Soll-Feuchtegehalt des Schüttguts der untersten Schicht einzustellen.

Mit dem erfindungsgemäßen Computerprogrammprodukt können Daten aus einem dem Computer zugeordneten Speicher abgerufen werden. Mit den Daten kann der Computer Stell- und Regelgrößen der Anlage berechnen. In der dem Computer zugeordneten Datenbank werden z.B. Daten zum Volumen eines jeden Trocknungstrichters, zum Volumen eines jeden Reservoirs, zu Materialparametern des Schüttguts, wie z.B. Materialnummer, Materialname, Soll-Temperatur für das Material im jeweiligen Trocknungstrichter, zur minimalen Trocknungszeit des Schüttguttyps im jeweiligen Trocknungstrichter und zur Sollgasmenge für das Material im jeweiligen Trocknungstrichter hinterlegt. Mittels dieser Daten berechnet der Computer die Stell- und Regelgrößen der Anlage.

Der Computer bzw. das erfindungsgemäße Computerprogrammprodukt überwachen bzw. zeichnen die Auslastung eines oder mehrerer der Trocknungstrichter auf. Bei einer Auslastung unter einem vorbestimmten Wert, wird zumindest die Leistung der Heizung für eine bestimmte Zeitspanne gesenkt.

Der Materialabscheider eines jeden Trocknungstrichters hat eine in den jeweiligen Trocknungstrichter schwenkbare Materialklappe, über die das jeweilige Schüttgut in den jeweiligen Trocknungstrichter verbracht wird. Das Schüttgut wird dann vom Materialabscheider in den Trocknungstrichter verbracht, wenn die schwenkbare Materialklappe aufgrund der Schwerkraft des in den Materialabscheider befindlichen Schüttguts geöffnet wird.

Mittels der Daten zum Volumen des dem jeweiligen Materialabscheiders zugeordneten Trocknungstrichters und zum Volumen des jeweiligen Trocknungstrichters wird die Anzahl der Fördervorgänge für eine komplette Befüllung des Trocknungstrichters ermittelt.

Selbstverständlich wird für die Trocknung von Schüttgut vorausgesetzt, dass das Schüttgut auch entsprechend der vom Hersteller spezifizierten Lagerbedingungen gelagert ist.

Ferner ist die Anordnung mit mehreren Kupplungsbahnhöfen versehen, so dass z.B. aus einem Reservoir für Schüttgut mehrere der Trocknungstrichter mit Schüttgut versorgt werden können. Prinzipiell kann das Schüttgut aus jedem der Reservoirs auch jedem der Trocknungstrichter der Anlage zugeführt werden.

Weitere Vorteile und vorteilhafte Ausgestaltungen der Erfindung sind Gegenstand der nachfolgenden Figuren sowie deren Beschreibungsteile.

Es zeigen im Einzelnen:

**Figur 1** eine schematische Ansicht einer Anlage, bei der die erfindungsgemäße Steuerung Anwendung findet, wobei aus Gründen der Übersichtlichkeit nur ein Trocknungstrichter dargestellt ist;

**Figur 2** eine schematische Ansicht der Anlage mit einer Vielzahl von Trocknungstrichtern sowie deren Verschaltung, mit einem Trockengaserzeuger und einem Computer;

**Figur 3** ein Ablaufdiagramm zur schematischen Darstellung des mit der Steuerung implementierten Verfahrens zum Entfeuchten von Schüttgut;

**Figur 4** eine schematische Ansicht des oberen Bereichs eines Trocknungstrichters, der von oben her befüllt wird;

**Figur 5** eine schematische Darstellung der im Trocknungstrichter ausgebildeten und zu unterschiedlichen Zeiten in den Trocknungstrichter gefüllten Schichten von Schüttgut;

**Figur 6** eine mögliche Ausführungsform einer Startseite, die auf einem Display eines Computers für die Steuerung einer Anlage zum Entfeuchten von Schüttgut dargestellt wird;

**Figur 7** eine mögliche Ausführungsform einer Eingabemaske für die in der Anlage verarbeitbaren Materialien und deren Parameter hierzu;

**Figur 8** eine mögliche Ausführungsform der graphischen Darstellung einer Gruppe von Trocknungstrichtern der Anlage, auf dem Display für den Computer;

**Figur 9** eine mögliche Ausführungsform der graphischen Darstellung der aktuellen Status- und Messwerte eines der Trocknungstrichter;

**Figur 10** eine mögliche Ausführungsform der graphischen Darstellung der Förderstatistik von Schüttgut eines ausgewählten Trocknungstrichters;

**Figur 11** eine mögliche Ausführungsform der graphischen Darstellung der Auslastungs- und Temperaturübersicht eines Trocknungstrichters im Normalbetrieb; und

**Figur 12** eine mögliche Ausführungsform der graphischen Darstellung der Auslastungs- und Temperaturübersicht eines Trocknungstrichters mit Standby-Phasen.

Für gleiche oder gleich wirkende Elemente der Erfindung werden identische Bezugszeichen verwendet. Das dargestellte Ausführungsbeispiel stellt lediglich eine Ausführungsform dar, wie die Anlage bzw. das Computerprogrammprodukt ausgestaltet sein können, um einen definierten Soll-Feuchtegehalt für verschiedene mit der Anlage zu verarbeitende Schüttgüter einzustellen. Obwohl sich die nachfolgende Beschreibung auf Schüttgüter aus Kunststoffgranulat bezieht, soll dies nicht als Beschränkung der Erfindung aufgefasst werden. Es ist für einen Fachmann selbstverständlich, dass mit der gegenwärtigen Erfindung auch granulatförmige Schüttgüter getrocknet bzw. definiert entfeuchtet werden können, die kein Kunststoffgranulat sind.

**Figur 1** zeigt eine schematische Ansicht einer möglichen Ausführungsform der Anlage 100, bei der die erfindungsgemäße Steuerung angewendet wird, wobei aus Gründen der Übersichtlichkeit nur ein Trocknungstrichter 10 dargestellt ist. In der Regel umfassen Anlagen 100 zum Entfeuchten von Schüttgut 20 aus Kunststoffgranulat mindestens einen Trocknungstrichter $10_1$, $10_2$, ..., $10_N$ (hier nicht dargestellt). In jedem der Trocknungstrichter $10_1$, $10_2$, ..., $10_N$ können unterschiedliche Arten von Schüttgut $20_1$, $20_2$, ..., $20_M$ (hier nicht dargestellt) aufbewahrt werden, die je nach Bedarf sortenrein oder als Gemisch aus mehreren Trocknungstrichtern $10_1$, $10_2$, ..., $10_N$ einem Verbraucher 18 (Spritzgießmaschine) zugeführt werden.

Wie aus der schematischen Darstellung der Figur 1 ersichtlich ist, ist der Trocknungstrichter 10 über eine erste Leitung 11 für eine Zufuhr von getrocknetem Gas aus einem Trockengaserzeuger 1 verbunden. Über eine zweite Leitung 12 kann das mit Feuchtigkeit beladene Gas aus dem Trocknungstrichter 10 abgeleitet und dem Trockengaserzeuger 1 zugeführt werden. Bevorzugt ist das für die Trocknung verwendete Gas herkömmliche Luft, die gegebenenfalls gereinigt sein kann.

Das getrocknete Gas aus einem Trockengaserzeuger 1 wird über einen Durchflusssensor 6, der in der ersten Leitung 11 zum Trocknungstrichter 10 vorgesehen ist, geführt. Eine Heizung 2 ist in der ersten Leitung 11 dem Trocknungstrichter 10 vorgeordnet. Ein Temperatursensor $2_T$ ist der Heizung 2 zugeordnet und mit einer ersten Kommunikationsverbindung 21 mit dem Computer 3 bzw. dessen Interface 38 verbunden. Zwischen dem Durchflusssensor 6 und der Heizung 2 ist eine Stellklappe 4 zum automatischen Einstellen der zum Trocknungstrichter 10 geführten Gasmenge vorgesehen. Der- Stellklappe 4 ist ein Aktuator $4_A$ zugeordnet, der über eine zweite Kommunikationsverbindung 22 mit einem Interface 38 des Computers 3 verbunden ist. Über die zweite Kommunikationsverbindung 22 erhält der Aktuator $4_A$ vom Computer 3 die für die automatische Einstellung der Stellklappe erforderlichen Befehle. Der Computer 3 erzeugt Steuersignale, die über das Interface 38 und die zweite Kommunikationsverbindung 22 an die Stellklappe 4 übermittelt werden, um die dem Trocknungstrichter 10 zugeführte Gasmenge einzustellen.

Dem Trocknungstrichter 10 wird das Schüttgut aus einem Reservoir 9 zugeführt. Hierzu ist eine Unterdruckpumpe 5 mit einen Materialabscheider 8 verbunden. Eine Materialleitung 14 aus dem Reservoir 9 führt über ein steuerbares Ventil 13 zum Materialabscheider 8. Das steuerbare Ventil 13 ist über eine zweite Kommunikationsverbindung 22 z.B. mit dem Interface 38- des Computers 3 verbunden.

Ein Füllstandsensor 7 ist dem Materialabscheider 8 des Trocknungstrichters 10 zugeordnet. Der Füllstandsensor 7 ist über eine erste Kommunikationsverbindung 21 mit dem Interface 38 des Computers 3 verbunden. Der Trocknungstrichter 10 hat einen Materialabsaugkasten 16, von dem aus das Schüttgut 20 mit einem definierten Feuchtegehalt über eine Ventil 15 einem Verbraucher 18 (z.B. ein Extruder) zugeführt wird. Das Ventil 15 ist über eine zweite Kommunikationsverbindung 22 mit dem Interface 38 des Computers 3 verbunden. Die erste Kommunikationsverbindung 21 und die zweite Kommunikationsverbindung 22 der Anlage 100 können drahtlos und/oder drahtgebunden ausgeführt sein. Für die Förderung in den Materialabscheider 8 wird ebenfalls im Speicher 17 des Computers 3 eine maximale Förderzeit hinterlegt. Die festgelegte maximale Förderzeit reicht gut aus, um den Materialabscheider 8 zu füllen. Sollte innerhalb der maximalen Förderzeit kein Signal vom Füllstandsensor 7 erfolgen, ist dies ein Hinweis, dass bei der Förderung von Schüttgut bzw. Material in den Materialabscheider 8 eine Störung aufgetreten sein muss. Eine entsprechende Fehlermeldung wird dokumentiert.

Dem Computer 3 ist ein Speicher 17 zugeordnet, in dem im Wesentlichen Daten zum Volumen eines jeden Trocknungstrichters 10, zum Volumen eines jeden Reservoirs 9, zu Materialparametern des Schüttguts 20, wie z.B. Materialnummer, Materialname, Solltemperatur für das Material im jeweiligen Trocknungstrichter 10, zur minimalen Trocknungszeit für das Material im jeweiligen Trocknungstrichter 10 und zur Sollluftmenge für das Material im jeweiligen Trocknungstrichter 10 hinterlegt sind. Diese Daten können vom Computer 3 für Berechnungen abgerufen werden.

Mit der erfindungsgemäßen Steuerung kann die Gasmenge durch den jeweiligen Trocknungstrichter 10 geregelt und der Durchsatz des Schüttguts 20 überwacht werden. Die im jeweiligen Trocknungstrichter 10 benötigte Gasmenge wird über die Stellklappe 4 in der ersten Leitung 11 eingestellt. Die Regelgröße für die Stellklappe 4 wird vom Computer 3 ermittelt. Zur Überwachung des Durchflusses der Gasmenge ist der Durchflusssensor 6 vorgesehen, der die ermittelten Daten über das Interface 38 an den Computer 3 liefert, der die Daten verarbeitet und der Gasmengenregelung für die einzelnen Trocknungstrichter 10 zuführt.

Ebenso kann mit der erfindungsgemäßen Steuerung oder dem erfindungsgemäßen Computerprogrammprodukt der Durchsatz des Schüttguts 20 in der gesamten Anlage bzw. beim individuellen Trocknungstrichter 10 überwacht werden. Der Füllstandsensor 7, der am Materialabscheider 8 des Trocknungstrichters 10 vorgesehen ist, liefert ein Signal über die erste Kommunikationsverbindung 21 an das Interface 38 des Computers 3, sobald die Soll-Fördermenge an Schüttgut 20 erreicht ist. Das Ventil 13 in der Materialleitung 14 kann über den Computer 3 gesteuert werden, wodurch ein Leersaugvorgang im Anschluss an den Fördervorgang, dem Transport von neuem Schüttgut 20 in den Trocknungstrichter 10, verhindert ist. Würde der Leersaugvorgang im Anschluss an den Förderprozess von Schüttgut 20 nicht verhindert werden, könnte man die in den Trocknungstrichter 10 gelangende Menge an Schüttgut 20 nicht genau bestimmen. Es würde auch Schüttgut 20 in den Materialabscheider 8 gelangen, das sich noch in der Materialleitung 14 befindet und dessen Menge nicht bestimmbar ist. Das Volumen des Förderprozesses kann für den Materialabscheider 8 im Computer 3 bzw. dem zugeordneten Speicher 17 hinterlegt und ausgewählt werden. Ebenso kann das Volumen des Trocknungstrichters 10 im Computer 3 bzw. dem zugeordneten Speicher 17 hinterlegt und ausgewählt werden. Diese Daten dienen als Grundlage zu Berechnung des Durchsatzes an Schüttgut 20.

Der Trockengaserzeuger 1 umfasst ein steuerbares Gebläse 23, das für eine vorgebbare Gasströmung (Luftströmung) im Trockengaserzeuger 1 sorgt und diese überwacht. Ferner ist ein Taupunkt- und Durchflusssensor 24 dem Trockengaserzeuger 1 zugeordnet, so dass dadurch die Funktion des Trockengaserzeugers 1 überwacht werden kann. Der Computer 3 ist über das Interface 38 und die erste Kommunikationsverbindung 21 mit dem steuerbaren Gebläse 23 verbunden. Der Taupunkt- und Durchflusssensor 24 liefert über die erste Kommunikationsverbindung 22 und das Interface 38 Signale an den zentralen Computer 3.

Eine schematische Ansicht einer gängigen Ausführungsform der Anlage 100, bei der die erfindungsgemäße Steuerung Anwendung findet, ist in Figur 2 dargestellt. Hier sind im Gegensatz zur Darstellung der Figur 1 eine Vielzahl von Trocknungstrichtern $10_1$, $10_2$,..., $10_N$ mit dem mindestens einen Trockengaserzeuger 1 und dem zentralen Computer 3 über ein Interface 38 verschaltet. Die einzelnen Trocknungstrichter $10_1$, $10_2$,..., $10_N$ sind, wie bereits in Figur 1 gezeigt, mit einem Materialabscheider 8 und einem Materialabsaugkasten 16 verbunden. Jeder der Trocknungstrichter $10_1$, $10_2$,..., $10_N$ ist über eine erste Leitung 11 für eine Zufuhr von getrocknetem Gas aus einem Trockengaserzeuger 1 verbunden. Über eine zweite Leitung 12 kann das mit Feuchtigkeit beladene Gas aus jedem der Trocknungstrichter $10_1$, $10_2$,..., $10_N$ abgeleitet und dem Trockengaserzeuger 1 zugeführt werden. Der Übersicht halber werden nur die Elemente in der ersten Leitung 11 zum Trocknungstrichter $10_1$ beschrieben. Bei den übrigen Trocknungstrichtern $10_2$,..., $10_N$ sind die benötigten Elemente identisch. Das getrocknete Gas aus einem Trockengaserzeuger 1 wird über einen Durchflusssensor 6, der in der ersten Leitung 11 zum Trocknungstrichter $10_1$ vorgesehen ist, geführt. Eine Heizung 2 ist in der ersten Leitung 11 dem Trocknungstrichter $10_1$ vorgeordnet. Zwischen dem Durchflusssensor 6 und der Heizung 2 ist eine Stellklappe 4 zum automatischen Einstellen der zum Trocknungstrichter $10_1$ geführten Gasmenge vorgesehen. Der Durchflusssensor 6 ist über eine erste Kommunikationsverbindung 21 und das Interface 38 mit dem Computer 3 verbunden.

Der Computer 3 liefert wiederum Steuersignale über eine zweite Kommunikationsverbindung 22 an die Stellklappe 4, um die dem Trocknungstrichter $10_1$ zugeführte Gasmenge einzustellen. Das Ventil 15 ist über eine zweite Kommunikationsverbindung 22 und das Interface 38 mit dem Computer 3 verbunden. Der Füllstandsensor 7 ist dem Materialabscheider 8 des Trocknungstrichters $10_1$ zugeordnet und über die erste Kommunikationsverbindung 21 und das Interface 38 mit dem Computer 3 verbunden.

Jedem der Trocknungstrichter $10_1$, $10_2$,..., $10_N$ wird aus einem jeweils zugeordneten Reservoir $9_1$, $9_2$,...,$9_N$ das Schüttgut $20_1$, $20_2$, ..., $20_M$ zugeführt. Zur Förderung des Schüttguts $20_1$, $20_2$, ..., $20_M$ aus den Reservoirs $9_1$, $9_2$,...,$9_M$ ist mit jedem Materialabscheider 8 der Trocknungstrichter $10_1$, $10_2$,..., $10_N$ eine Unterdruckpumpe 5 verbunden. In der Materialleitung 14 vom jeweiligen Reservoir $9_1$, $9_2$,...,$9_M$ ist ein Ventil 13 vorgesehen, mit dem der Transport von Schüttgut $20_1$, $20_2$, ..., $20_M$ aus dem Reservoir $9_1$, $9_2$,...,$9_M$ zum jeweiligen Materialabscheider 8 gesteuert werden kann. Das Ventil 13 ist mit dem_Computer 3 verbunden. Die Befüllung der Trocknungstrichter $10_1$, $10_2$,..., $10_N$ wird über den Füllstandsensor 7 am Materialabscheider 8 gesteuert. Somit kann gewährleistet werden, dass immer mit einem gestarteten Fördervorgang von Schüttgut $20_1$, $20_2$, ..., $20_M$ aus einem der Reservoirs $9_1$, $9_2$,...,$9_M$ eine komplette Befüllung des jeweiligen Trocknungstrichters $10_1$, $10_2$,..., $10_N$ erreicht wird. Wie bereits erwähnt, ist der Leersaugvorgang unterbrochen. Hierzu ist das mit dem Computer 3 verbundene Ventil 13 und der Füllstandsensor 7 vorgesehen. Es ist für die effektive und zielgenaue Trocknung (Entfeuchtung) wichtig, dass man genau und zuverlässig die Menge des im jeweiligen Trocknungstrichter $10_1$, $10_2$,..., $10_N$ befindlichen Schüttguts $20_1$, $20_2$, ..., $20_M$ kennt. Das Volumen des bei jedem Förderprozess geförderten Schüttguts $20_1$, $20_2$, ..., $20_M$ kann individuell in den dem Computer 3 zugeordneten Speicher 17 (auch externe Speicherung (Cloud)) hinterlegt und ausgewählt werden. Ebenso kann das Volumen für jeden Trocknungstrichter $10_1$, $10_2$,..., $10_N$ individuell in den dem Computer 3 zugeordneten Speicher 17 (auch externe Speicherung (Cloud)) hinterlegt und daraus ausgewählt werden. Diese Daten dienen als Grundlage für die Berechnung des Durchsatzes von Schüttgut $20_1$, $20_2$, ..., $20_M$ bei den individuellen Trocknungstrichtern $10_1$, $10_2$,..., $10_N$. Zusätzlich kann für jeden Trocknungstrichter $10_1$, $10_2$,..., $10_N$ die Sorte des Schüttguts $20_1$, $20_2$, ..., $20_M$ ausgewählt werden. Die für die Sorte des Schüttguts $20_1$, $20_2$, ..., $20_M$ im Speicher 17 des Computers 3 hinterlegten Trocknungsparameter werden vom Computer 3 aus einer im Speicher 17 hinterlegten Materialdatenbank ausgelesen. Diese Daten werden ebenfalls für die Berechnung des Durchsatzes von dem Schüttgut $20_1$, $20_2$, ..., $20_M$ berücksichtigt.

Mit Hilfe der vorhandenen Daten der Volumina von Materialabscheider 8 und den jeweiligen Trocknungstrichtern $10_1$, $10_2$,..., $10_N$ wird die Anzahl der Fördervorgänge für eine komplette Befüllung der jeweiligen Trocknungstrichter $10_1$, $10_2$,..., $10_N$ ermittelt. Die Zeiträume zwischen den einzelnen Fördervorgängen für jeden der Trocknungstrichter $10_1$, $10_2$,..., $10_N$ werden erfasst, aufgezeichnet und zur Berechnung der Gesamtzeit durch den Computer 3 verwendet. Durch die vorhandenen Daten kann die Auslastung der jeweiligen Trocknungstrichter $10_1$, $10_2$,..., $10_N$ und der Materialdurchsatz der jeweiligen Trocknungstrichter $10_1$, $10_2$,..., $10_N$ berechnet werden.

Figur 3 zeigt in schematischer Darstellung eine Ausführungsform eines Ablaufdiagramms des Verfahrens bzw. der Steuerung einer Anlage 100 zum Entfeuchten von Schüttgut $20_1$, $20_2$, ..., $20_M$, insbesondere Kunststoff, in den verschiedenen Trocknungstrichtern $10_1$, $10_2$,..., $10_N$. Um ein effektives und reproduzierbares Entfeuchten zu erreichen, muss die Gasmenge (Luftmenge) durch die jeweiligen Trocknungstrichter $10_1$, $10_2$,..., $10_N$ geregelt werden. Ebenso werden Toleranzgrenzen der Gasmenge automatisch von der Anlage 100 in Abhängigkeit von der Menge des zu entfeuchtenden Schüttguts $20_1$, $20_2$, ..., $20_M$ im jeweiligen Trocknungstrichter $10_1$, $10_2$,..., $10_N$ festgelegt.

Bei einer:

Sollgasmenge $\geq 30$ m$^3$/h beträgt die Toleranzgrenze $\pm$ 1,5 m$^3$/h;
Sollgasmenge $\geq 20$ m$^3$/h beträgt die Toleranzgrenze $\pm$ 1,3 m$^3$/h;
Sollgasmenge $\geq$ 15 m$^3$/h beträgt die Toleranzgrenze $\pm$ 1,1 m$^3$/h;
Sollgasmenge $\geq$ 10 m$^3$/h beträgt die Toleranzgrenze $\pm$ 0,8 m$^3$/h; und
Sollgasmenge < 10 m$^3$/h beträgt die Toleranzgrenze $\pm$ 0,5 m$^3$/h.

Vom_Computer 3 erfolgt ein Signal zum Öffnen oder Schließen der Stellklappe 4, wenn eine Abweichung außerhalb der Toleranzgrenzen um $\pm$ 0,1 m$^3$/h festgestellt wird. Die Regelung der Stellklappe 4 in der ersten Leitung 11 zu dem jeweiligen Trocknungstrichter $10_1$, $10_2$,..., $10_N$ erfolgt alle zwei Minuten. Dies dient besonders zur Schonung der Stellklappen 4 und der damit verknüpften Mechanik.

Bei einer Meldung "OFEN AUS" wird nach 30 Minuten die Stellklappe 4 zu dem jeweiligen Trocknungstrichter $10_1$, $10_2$,..., $10_N$ geschlossen. Als "OFEN" wird der Trocknungstrichter $10_1$, $10_2$,..., $10_N$ mit der ihm zugeordneten Heizung 2 und dem Materialabscheider 8 bezeichnet.

Um kurzfristige Abweichungen der gemessenen Signale außerhalb der Toleranzgrenzen nicht in die Regelung mit einfließen zu lassen, erscheint eine Fehlermeldung erst nach einer vordefinierten Zeitspanne. Diese Zeitspanne kann z.B. 5 Minuten betragen. Die Überwachung der Gasmenge ist deaktiviert, wenn der jeweilige Trocknungstrichter $10_1$, $10_2$,..., $10_N$ in Standby-Betrieb (Standby-Modus) ist.

Ebenso wird die Temperatur des Gases überwacht, die den jeweiligen Trocknungstrichtern $10_1$, $10_2$,..., $10_N$ in der Anlage 100 zugeführt wird. -Bei Überschreiten einer Soll-Temperatur von $\geq$ 25°C erscheint sofort die Fehlermeldung "Übertemperatur" und es wird die Heizung 2 für den jeweiligen Trocknungstrichter $10_1$, $10_2$,..., $10_N$ abgeschaltet. Diese Maßnahme dient insbesondere dem Brandschutz. Die Toleranzgrenze der Solltemperatur beträgt ± 5°C. Wenn die Ist-Temperatur länger als eine vordefinierte Zeitspanne außerhalb der Toleranzgrenze liegt, erscheint eine Fehlermeldung. Die Fehlermeldung lautet "Übertemperatur" bzw. "Untertemperatur". Es erfolgt aus Sicherheitsgründen die Abschaltung der Heizung 2, denn es könnte auch ein elektrischer Defekt vorliegen, der zu der Fehlermeldung "Übertemperatur" führt. Diese Zeitspanne kann z.B. 15 Minuten betragen. Falls eine Temperaturabsenkung erforderlich ist, wird die Fehlermeldung "Übertemperatur" deaktiviert, bis die Ist-Temperatur die Soll-Temperatur, auf die abgesenkt werden soll, erreicht hat. In diesem Zeitraum beträgt die Einschaltdauer der Heizung 0%.

Eine Vielzahl von Berechnungen wird mit dem Computer 3 durchgeführt. Die für die Berechnung erforderlichen Daten sind in einer dem Computer 3 zugeordneten Datenbank 17 abgelegt.

Bei der Anlage 100 zum Entfeuchten von Schüttgut $20_1$, $20_2$,...$20_M$ muss der maximal erlaubte Durchsatz an Schüttgut $20_1$, $20_2$,...$20_M$ pro Trocknungstrichter $10_1$, $10_2$,..., $10_N$ berechnet werden. Für den Trocknungstrichter $10_1$ errechnet sich der Durchsatz an Schüttgut $20_1$ wie folgt:

$$M_{Max} = \frac{V}{t_{\min}}$$

dabei ist:

- $M_{Max}$ der maximal erlaubte Durchsatz an Schüttgut $20_1$, $20_2$,...$20_M$ in Liter/Std. pro Trocknungstrichter $10_1$, $10_2$,..., $10_N$;
- $V$ das Volumen des Trocknungstrichters $10_1$, $10_2$,..., $10_N$; und
- $t_{\min}$ die minimale Trocknungsdauer für das Schüttgut $20_1$, $20_2$,...$20_M$.

$$M(t) = F \times V_{Mat}$$

Dabei ist:

- $M(t)$ der Durchsatz an Schüttgut $20_1$, $20_2$,...$20_M$ in Liter/Std.;
- $F$ die Anzahl der Förderzyklen pro Stunde für jeden Trocknungstrichter $10_1$, $10_2$,..., $10_N$; und
- $V_{Mat}$ das Volumen eines jeden Trocknungstrichters $10_1$, $10_2$,..., $10_N$ zugeordneten Materialabscheiders 8.

Die Auslastung der Trocknungstrichter $10_1$, $10_2$,..., $10_N$ ist wichtig, damit für die Verarbeitung von optimal getrocknetem Schüttgut $20_1$, $20_2$,...$20_M$ aus dem Trocknungstrichter $10_1$, $10_2$,..., $10_N$ dieses auch immer ausreichend mit der erforderlichen Qualität zur Verfügung steht.

$$R_{TT} = \frac{M(t)}{M(t)_{\max}}$$

dabei ist:

- $R_{TT}$ die Auslastung eines jeden Trocknungstrichters $10_1$, $10_2$,..., $10_N$ in %; und $M(t)_{max}$ der maximal erlaubte Materialdurchsatz für jeden Trocknungstrichter $10_1$, $10_2$,..., $10_N$ in Liter/Std.

Ebenso ist es wichtig, die Soll-Gasmenge zu bestimmen, die durch jeden der Trocknungstrichter $10_1$, $10_2$,..., $10_N$ geleitet werden muss, um die geforderte Trocknung des Schüttguts $20_1$, $20_2$,...$20_M$ im jeweiligen Trocknungstrichter $10_1$, $10_2$,..., $10_N$ zu erreichen.

$$SL = SL_H \times M(t) \times f_{\delta Mat}$$

dabei ist:

*SL* die Soll-Gasmenge, die erforderlich ist, um die erforderliche Trocknung des Schüttguts $20_1$, $20_2$,...$20_M$ zu erreichen;

$SL_H$ ist die Herstellerangabe der Soll-Gasmenge für den Typ des Schüttguts $20_1$, $20_2$,...$20_M$, das sich im Trocknungstrichter $10_1$, $10_2$,..., $10_N$ befindet; und $f_{\delta Mat}$ ein Faktor der Dichte, mit der das Schüttgut $20_1$, $20_2$,...$20_M$ im jeweiligen Trocknungstrichter $10_1$, $10_2$,..., $10_N$ geschichtet ist.

Ferner ist die Zeitdauer bzw. der Zeitpunkt festzustellen, wann die Freigabe des Materials aus dem jeweiligen Trocknungstrichter $10_1$, $10_2$,..., $10_N$ erfolgen kann.

$$t_{Frei} = t_{\min} - t_{Gesamt}$$

dabei ist:

$t_{Frei}$ die Zeitdauer, bei der die Freigabe des Schüttguts $20_1$, $20_2$,...$20_M$ im jeweiligen Trocknungstrichter $10_1$, $10_2$,..., $10_N$ erfolgen kann; und

$t_{Gesamt}$ die Gesamtzeit aus der Statistik, die erforderlich ist, um bei einem komplett gefüllten Trocknungstrichter $10_1$, $10_2$,..., $10_N$ die für die Verarbeitung des Schüttguts $20_1$, $20_2$,...$20_M$ erforderliche Feuchte einzustellen.

Besonders wichtig für die Steuerung und Regelung der Anlage 100 zum Entfeuchten von Schüttgut aus Kunststoff durch den Computer 3 ist der Einfluss der verschiedenen Funktionszustände der jeweiligen Trocknungstrichter $10_1$, $10_2$,..., $10_N$.

Die Funktionsweise des jeweiligen Trocknungstrichters $10_1$, $10_2$,..., $10_N$ gestaltet sich derart, dass nach dem Einschalten der Heizung 2 oder einem Wechsel des Schüttguts $20_1$, $20_2$....$20_M$ im jeweiligen Trocknungstrichter $10_1$, $10_2$,..., $10_N$ die Materialfreigabe zur Verarbeitung gesperrt ist. Es erscheint auch eine Fehlermeldung "Materialmangel", wenn nach der maximalen Förderzeit kein Signal vom Füllstandsensor 7 des Materialabscheiders 8 des jeweiligen Trocknungstrichters $10_1$, $10_2$,..., $10_N$ dem Computer 3 zugeführt wird.

Die Funktion "Leersaugen" der Materialleitung 14 wird für drei verschiedene Situationen gestartet, wie zum Beispiel wenn ein Trocknungstrichter $10_1$, $10_2$,..., $10_N$ ausgeschaltet wird, wenn der Typ des Schüttguts $20_1$, $20_2$,...$20_M$ im jeweiligen Trocknungstrichter $10_1$, $10_2$,..., $10_N$ geändert wird, oder wenn eine Taste (nicht dargestellt) "Leersaugen" manuell betätigt wird. Die manuelle Betätigung ist immer dann wichtig, wenn die Materialleitungen 14 aus dem jeweiligen Reservoir $9_1$, $9_2$,...,$9_M$ gereinigt werden. Die ist vor allem auch dann wichtig, wenn ein neuer Typ an Schüttgut $20_1$, $20_2$,...$20_M$ in den jeweiligen Trocknungstrichter $10_1$, $10_2$,..., $10_N$ eingebracht werden soll.

Wenn das Schüttgut $20_1$, $20_2$,...$20_M$ aus dem dem jeweiligen Trocknungstrichter $10_1$, $10_2$,..., $10_N$ zugeordneten jeweiligen Reservoir $9_1$, $9_2$,...,$9_M$ gefördert wird, wird die Förderung in den jeweiligen Materialabscheider 8 solange durchgeführt, bis ein Signal vom Füllstandsensor 7 an den Computer 3 geliefert wird. Das Signal zeigt an, dass der entsprechende Trocknungstrichter $10_1$, $10_2$,..., $10_N$ wieder voll befüllt ist.

Ebenso wurde die Funktion des "Leersaugens" der Materialleitung 14 deaktiviert. Dies stellt sicher, dass in den Materialabscheidern 8 der jeweiligen Trocknungstrichter $10_1$, $10_2$,..., $10_N$ immer gleiche Füllstände erreicht werden. Um exakt die von dem Füllstandsensor 7 gemessenen Füllstände im Materialabscheider 8 des jeweiligen Trocknungstrichters $10_1$, $10_2$,..., $10_N$ in den entsprechenden Trocknungstrichter $10_1$, $10_2$,..., $10_N$ zu überführen, wird das in der Materialleitung 14 verbleibende Schüttgut $20_1$, $20_2$,...$20_M$ nicht in den dem entsprechenden Trocknungstrichter $10_1$, $10_2$,..., $10_N$ zugeordneten Materialabscheider 8 gefördert. Das in der Materialleitung 14 verbleibende Schüttgut $20_1$, $20_2$,...$20_M$ kann anderweitig abgesaugt werden und wird z. B. beim darauffolgenden Förderprozess in den Materialabscheider 8 gefördert.

Bei der Förderung von Schüttgut $20_1$, $20_2$,...$20_M$ in den entsprechenden Trocknungstrichter $10_1$, $10_2$,..., $10_N$ werden pro Fördervorgang vier Zeiten aufgezeichnet, nämlich:

"Letzter Fördervorgang vor";
"Dauer des letzten Fördervorgangs";
"Dauer des letzten Standby-Vorgangs"; und
"Fehler".

In der Fehlerstatistik werden maximal 25 Zeiten erfasst. Aus den erfassten Zeiten wird, abhängig von der Größe der entsprechenden Trocknungstrichter $10_1$, $10_2$,..., $10_N$, die jeweilige Gesamt- und Durchschnittszeit berechnet. So werden bei einem:

Volumen des Trocknungstrichters 10 von ≤ 50 Litern die letzten fünf Zyklen;

Volumen des Trocknungstrichters 10 von > 50 und ≤ 100 Litern die letzten zehn Zyklen;
Volumen des Trocknungstrichters 10 von > 100 und ≤ 150 Litern die letzten fünfzehn Zyklen; und
Volumen des Trocknungstrichters 10 von > 150 Litern die letzten zwanzig Zyklen bewertet.

Falls ein Trocknungstrichter$10_1$, $10_2$,..., $10_N$ ausgeschaltet wird, wird die Zeit für "letzter Fördervorgang vor" auf null gesetzt. Bei einer Auslastung eines oder mehrerer der Trocknungstrichter $10_1$, $10_2$,..., $10_N$ unter 90%, kann die Temperatur, mit der die Gasmenge dem jeweiligen Trocknungstrichter $10_1$, $10_2$,..., $10_N$ zugeführt wird, für eine bestimmte Zeit gesenkt werden. Dadurch werden Stromspitzen im Betrieb vermieden. Hierzu wird ein Signal an einem Stromübergabepunkt (nicht dargestellt) vom Energieversorgungsunternehmen (EVU) abgegriffen. Die Leistung der Heizung 2 kann dann in Abstimmung mit dem Computer 3 heruntergefahren werden. Dies führt zu einer Stromeinsparung im gesamten Betrieb.

Falls im Zeitraum der "minimalen Trocknungszeit" und der "Zeit Heizung absenken" kein Fördervorgang aktiv war, wird die Absenkung der Temperatur der dem jeweiligen Trocknungstrichter $10_1$, $10_2$,..., $10_N$ zugeführten Gasmenge aktiviert.

Mittels eines Signals vom Computer 3 erfolgt die Freigabe des Schüttguts $20_1$, $20_2$,...$20_M$ aus dem jeweiligen Trocknungstrichter $10_1$, $10_2$,..., $10_N$ an den Verbraucher 18 (Spritzgießmaschine). Durch das Signal vom der Computer 3 wird das Ventil 15 in einer Materialleitung 19 (siehe Figur 1 oder Figur 2) vom Materialabsaugkasten 16 zum Verbraucher 18 in entsprechender Weise angesteuert. Die Freigabe erfolgt unter den folgenden Bedingungen:

Gesamtzeit > minimale Trocknungsdauer;
die der Temperatur der Vorgabe entspricht;
die der Gasmenge durch den jeweiligen Trocknungstrichter $10_1$, $10_2$,..., $10_N$ der Vorgabe entspricht;
der Durchsatz an Schüttgut $20_1$, $20_2$,..., $20_M$ ist < 100%; oder
Es ist kein neuer Typ des Schüttgut $20_1$, $20_2$,..., $20_M$ im Zeitraum der minimalen Trocknungsdauer ausgewählt worden.

Ein Entzug der Freigabe des Schüttguts $20_1$, $20_2$,..., $20_M$ an den bzw. die Verbraucher 18 erfolgt unter den folgenden Bedingungen:

der Durchsatz an Schüttgut $20_1$, $20_2$,..., $20_M$ ist > 100%;
der entsprechende Trocknungstrichter $10_1$, $10_2$,..., $10_N$ ist aus; oder
ein Wechsel des Typs des Schüttguts $20_1$, $20_2$,..., $20_M$ im entsprechenden Trocknungstrichter $10_1$, $10_2$,..., $10_N$ wurde durchgeführt.

Falls vom Computer 3 ein Fehler in der Anlage festgestellt wird, wird die Fehlerzeit dokumentiert und von der Trocknungszeit für das Schüttgut $20_1$, $20_2$,..., $20_M$ in den entsprechenden Trocknungstrichtern $10_1$, $10_2$,..., $10_N$ abgezogen. Bei einem Wechsel der entsprechenden Trocknungstrichter $10_1$, $10_2$,..., $10_N$ in den Standby-Modus, wird die Fehlerzeit angehalten und der Standby-Zeit zugerechnet. Von nun an wird die Standby-Zeit gemessen. Zur Berechnung der tatsächlichen Gesamttrocknungszeit werden von der gemessenen Trocknungszeit die Fehlerzeit und die Standby-Zeit subtrahiert. Im Standby-Modus erfolgt keine Anzeige von Fehlern. Der Fehler "Luftmenge zu hoch" kann deaktiviert werden. Die Fehlermeldung ist nicht deaktiviert, falls dem Trockengaserzeuger 1 ein steuerbares Gebläse 23 (siehe Figur 1) zugeordnet ist. Mit dem steuerbaren Gebläse 23 kann die den Trocknungstrichtern $10_1$, $10_2$,..., $10_N$ zuzuführende Gasmenge den Anforderungen entsprechend eingestellt werden.

Figur 4 zeigt eine schematische Ansicht des oberen Bereichs 95 eines Trocknungstrichters 10, der von oben her befüllt wird. Mittels der mindestens einen Unterdruckpumpe 5 (siehe Figur 1) wird an den Materialabscheider 8 ein Unterdruck angelegt. Hierzu ist die Unterdruckpumpe 5 über eine Leitung 34 mit dem Materialabscheider 8 verbunden. Das Ende der Leitung 34 am Materialabscheider 8 ist durch einen Filter 36 abgedeckt, um zu verhindern, dass Schüttgut 20 in die Leitung 34 gesaugt wird. Das Schüttgut 20 gelangt über die Materialleitung 14 in den Materialabscheider 8. Eine schwenkbare Materialklappe 32 trennt den Materialabscheider 8 vom Volumen des Trocknungstrichters 10. Der dem Materialabscheider 8 zugeordnete Füllstandsensor 7 überwacht die Befüllung des Materialabscheiders 8 mit Schüttgut 20. Wenn sich kein Schüttgut 20 im Materialabscheider 8 befindet, ist die Materialklappe 32 zum Trocknungstrichter 10 hin geschlossen. Dies bedeutet auch, dass wieder Schüttgut 20 in den Materialabscheider 8 gefördert wird, um immer eine komplette Befüllung des Trocknungstrichters 10 gewährleisten zu können. Wenn die Sollmenge an Schüttgut 20 im Materialabscheider 8 erreicht ist, öffnet die Materialklappe 32 durch einen Abfall des erzeugten Unterdrucks aufgrund der Beendigung des Förderzyklus und das Schüttgut 20 gelangt in den Trocknungstrichter 10, und die erste bzw. oberste Schicht $30_1$ bildet sich aus. Ein Schüttkegel 31 reicht dabei noch in den Materialabscheider 8 hinein, der aber bei Entnahme des nach Sollbedingungen getrockneten Schüttguts 20 aus dem Materialabsaugkasten 16 (siehe Figur 1) eingeebnet wird. Nachdem der Schüttkegel 31 eingeebnet ist, schließt die Materialklappe 32 und die nächste Befüllung des Materialabscheiders 8 kann beginnen.

Wie aus der schematischen Darstellung eines Trocknungstrichters 10 der Figur 5 zu entnehmen ist, sind im Trocknungstrichter 10 mehrere Schichten $30_1$, $30_2$, ..., $30_K$ des Schüttguts 20 ausgebildet, die zu unterschiedlichen Zeiten in den Trocknungstrichter 10 gefüllt wurden. Bei der hier beschriebenen Darstellung sind sechs Schichten $30_1$, $30_2$, ..., $30_6$ im Trocknungstrichter 10 vorgesehen. Die soll nicht als Beschränkung der Erfindung aufgefasst werden. Die Ausbildung der sechs Schichten $30_1$, $30_2$, ..., $30_6$ des Schüttguts 20 resultiert daraus, dass das Schüttgut 20, welches die erforderliche Feuchte hat, aus dem Trocknungstrichter 10 entnommen und an einen Verbraucher 18 übergeben wird. Parallel dazu wird weiteres Schüttgut 20 in den Materialabscheider 8 gefördert, damit der Trocknungstrichter 10 immer komplett gefüllt ist. In der Regel ist die Menge der Entnahme von Schüttgut 20 kleiner als das Gesamtvolumen des Trocknungstrichters 10. Über den Materialabscheider 8 wird mittels der Unterdruckpumpe 5 Schüttgut 20 auch dem Reservoir 9 (siehe Figur 1) nachgeliefert. Der Förderzyklus in dem Materialabscheider 8 läuft solange, bis der Füllstandsensor 7 die Soll-Befüllung des Materialabscheiders 8 meldet. Das aus dem Trocknungstrichter 10 für den Verbraucher 18 entnommene Schüttgut 20 wird somit in gleichem Maße von oben über den Materialabscheider 8 in den Trocknungstrichter 10 gefüllt. Es ist für einen Fachmann selbstverständlich, dass die einzelnen Schichten $30_1$, $30_2$,..., $30_6$ als Schichten zu verstehen sind, die zu unterschiedlichen Zeiten in den Trocknungstrichter 10 gefüllt wurden. Die einzelnen Schichten $30_1$, $30_2$,..., $30_6$ bestehen immer aus dem gleichen Typ des Schüttguts 20. Falls der Typ des Schüttguts im Trocknungstrichter 10 ausgetaucht werden soll, wird der komplette Trocknungstrichter 10 mit einem neuen Typ des Schüttguts 20 befüllt.

Falls nun ein Fördervorgang abgeschlossen ist, wird im Fehlerfall die Fehlerzeit neu gestartet. Die vorangegangene Fehlerzeit wird dem zugehörigen Fehlerzyklus zugerechnet. Dies bedeutet, dass jede im Trocknungstrichter 10 ausgebildete Schicht $30_1$, $30_2$,..., $30_6$ ihre Fehlerzeit mitzieht. Ferner ist ein Heizungsschutz vorgesehen. Vom Computer 3 wird die Heizung 2 erst nach einer minimalen Gasströmung durch den Trocknungstrichter 10 von 2,5$m^3$/h freigegeben.

Um die Parameter für die Trocknung bzw. Entfeuchtung des Schüttguts 20 im Trocknungstrichter 10 zu berechnen, sind in der Datenbank 17 die folgenden Daten für die Berechnung durch den Computer 3 hinterlegt: Volumen des Materialabscheiders 8, Volumen des Trocknungstrichters 10, die maximale Förderzeit (nicht wichtig für den Prozess der Trocknung), die Zeit zum Leersaugen der Materialleitung 14 (nicht wichtig für den Prozess der Trocknung), Förderzeit (nicht wichtig für den Prozess der Trocknung), das Reservoir 9, aus dem der Typ des Schüttguts 20 entnommen wurde (nicht wichtig für den Prozess der Trocknung) und der Typ des Schüttguts 20. Es ist für einen Fachmann selbstverständlich, dass die oben aufgeführte Aufzählung nicht abschließend ist und bei Bedarf weitere Parameter hinzugefügt oder bereits vorhandene Parameter weggelassen werden können.

Die unterschiedlichen Parameter für die unterschiedlichen Typen des Schüttguts 20 (Kunststoff) sind ebenfalls in der Datenbank 17 hinterlegt. Die Datenbank 17 für das Schüttgut 20 umfasst die folgenden Parameter: die Materialnummer, den Materialnamen, die Soll-Temperatur für die Trocknung (wichtig), das Temperaturfenster (Bandbreite der Abweichung von der Soll-Temperatur), die minimale Trocknungszeit (wichtig), die Absenktemperatur, die Soll-Gasmenge, die dem Trocknungstrichter 10 zugeführt wird (wichtig), das Absenken der Heizung 2 auf einen vorbestimmten Wert und der Materialcode. Es ist für einen Fachmann selbstverständlich, dass die oben aufgeführte Aufzählung nicht abschließend ist und bei Bedarf weitere Parameter hinzugefügt oder bereits vorhandene Parameter weggelassen werden können.

Ebenso ist eine Sicherheit vor Bedienfehlern eingebaut. Anhand der Materialnummer werden die notwendigen Parameter für die Trocknung des Schüttguts 20 automatisch dem Trocknungstrichter 10 zugewiesen, in dem sich das zu trocknende Schüttgut 20 befindet. Bei der Befüllung der Trocknungstrichters 10 erfolgt eine automatische Zuordnung zwischen dem Reservoir 9, aus dem das Schüttgut 20 entnommen worden ist, und dem Trocknungstrichter 10, dem das Schüttgut 20 zugeführt worden ist.

Ebenso kann in der Datenbank 17 eine Archivierung (u.a. für Reklamationen, Qualitätssicherung, etc.) vorgenommen werden. Die für die Archivierung vorgesehenen Werte sind z.B. die Ist-Temperatur der dem Trocknungstrichter 10 zugeführten Gasmenge, die Auslastung der Heizung 2 des Trocknungstrichters 10 sowie Fehler und Warnmeldungen der Anlage 100 bzw. der Trocknungstrichter 10. Es ist für einen Fachmann selbstverständlich, dass die oben aufgeführte Aufzählung nicht abschließend ist und bei Bedarf weitere Werte hinzugefügt oder bereits vorhandene Werte weggelassen werden können.

Ferner besteht die Möglichkeit, dass die Anlage 100- zum Entfeuchten von Schüttgut 20 über einen am Office-Netz angeschlossenen PC mittels einer mit Passwort geschützten Fernbedienung überwacht und bedient werden kann. Auf dem PC werden dann für den Benutzer die Darstellungen auf dem Display 40 des Computers 3 dargestellt.

In **Figur 5** ist beispielhaft ein Trocknungstrichter 10 dargestellt, der vollkommen mit Schüttgut 20 befüllt ist. Bei dem hier dargestellten Beispiel der Befüllung ist das Schüttgut 20 in sechs Schichten $30_1$, $30_2$,..., $30_6$ im Trocknungstrichter 10 geschichtet. Es ist für einen Fachmann selbstverständlich, dass sich mehr oder weniger als die sechs Schichten $30_1$, $30_2$,..., $30_6$ im Trocknungstrichter 10 befinden können. Die Darstellung der Figur 5 ist keinesfalls als Beschränkung der Erfindung aufzufassen.

Jeder der in der Anlage zum Entfeuchten von Schüttgut 20 vorgesehene Trocknungstrichter $10_1$, $10_2$,..., $10_N$ wird mit Schüttgut 20 gleichen Typs befüllt. Die unterschiedlichen Schichten $30_1$, $30_2$,..., $30_6$ unterscheiden sich dadurch, dass das Schüttgut 20 zu unterschiedlichen Zeiten in den Trocknungstrichter 10 gefüllt worden ist. Die unterste Schicht $30_6$ wurde zum Zeitpunkt $t_6$ in den Trocknungstrichter 10 gefüllt und ist somit am längsten im Trocknungstrichter 10. Die oberste Schicht $30_1$ wurde zum Zeitpunkt $t_1$ in den Trocknungstrichter 10 gefüllt und ist somit am kürzesten im Trocknungstrichter 10. Die Befüllung des Trocknungstrichters 10 in Schichten $30_1$, $30_2$,..., $30_6$ resultiert daraus, dass das für einen Spritzgießvorgang mit dem Verbraucher 18 verbrauchte Schüttgut 20 über den Materialabsaugkasten 16 entnommen wird. Die Menge des entnommenen Schüttguts 20 wird vom Computer 3 protokolliert. Entsprechend der aus dem Trocknungstrichter 10 entnommenen Menge an Schüttgut 20 wird die Menge über den Materialabscheider 8 wieder von oben her dem Trocknungstrichter 10 zugeführt.

Der Computer 3 kennt über den Durchsatz des Verbrauchers 18 (Förderung von Schüttgut 20 aus dem Trocknungstrichter 10) und die zeitlich unterschiedlichen Zyklen der Befüllung des jeweiligen Trocknungstrichters 10, die Verweildauer und die Schüttgutmenge der einzelnen Schichten $30_1$, $30_2$,..., $30_6$ im Trocknungstrichter 10. Ebenso wird durch den Computer 3 aufgrund der Verweildauer der einzelnen Schichten $30_1$, $30_2$,..., $30_6$ im Trocknungstrichter 10, der Fehlerzeiten (z.B. keine Zufuhr von Gas zur Entfeuchtung des Schüttguts 20; Dauer des Ausfalls der Heizung) und der Zeit, mit der die einzelnen Schichten $30_1$, $30_2$,..., $30_6$ im Trocknungstrichter 10 der Gasmenge zum Entfeuchten ausgesetzt waren, erkannt, ob die unterste Schicht $30_6$ die für die Entfeuchtung erforderliche Verweildauer im Trocknungstrichter 10 hat und ob diese Schicht $30_6$ der erforderlichen Soll-Gasmenge zum Entfeuchten ausgesetzt war. Nur wenn diese Vorgaben erfüllt sind, kann eine Freigabe der untersten Schicht $30_6$ im Trocknungstrichter 10 zur Verarbeitung gegeben werden. Die erfassten Fehlerzeiten werden bei der Wanderung der Schichten $30_1$, $30_2$,..., $30_6$ im Trocknungstrichter 10 von oben nach unten mitgenommen. Jede der Schichten $30_1$, $30_2$,..., $30_6$ hat Ihre eigene Fehlerzeit. Selbiges gilt auch für etwaige Standby-Zeiten.

Dem Computer 3 ist für Benutzereingaben und zur Visualisierung des Status und der Betriebsparameter der einzelnen Trocknungstrichter $10_1$, $10_2$,..., $10_N$ der Anlage 100 ein Display 40 zugeordnet. Es ist für einen Fachmann selbstverständlich, dass verschiedene Eingabemöglichkeiten für das Display 40 realisiert werden können (zum Beispiel. Touchscreen, Tastatur und Maus, Joystick etc.). Figur 6 zeigt eine mögliche Ausführungsform einer Startseite 41 auf dem Display 40 des Computers 3 der Anlage 100 zum Entfeuchten von Schüttgut 20. In einem Fenster 42 der Startseite 41 können für den Benutzer mehrere Meldungen angezeigt werden. Die Meldungen sind nach Uhrzeit und Datum sortiert und enthalten Text der Meldung und/oder eine Beschreibung des zu meldenden Fehlers, der bei der Überwachung der Trocknungstrichter $10_1$, $10_2$,..., $10_N$ aufgetreten ist. Ebenso umfasst die Startseite 41 mehrere Bedienbuttons 43.

Bei der hier dargestellten Ausführungsform sind ein Bedienbutton 43 für "Rezepturen/Materialübersicht", ein Bedienbutton 43 für "TT" (Trocknungstrichter), ein Bedienbutton 43 für "TT Kurven" (Kurven hinsichtlich Auslastungs- und Temperaturübersicht), ein Bedienbutton 43 für "Trockenlufterzeuger", ein Bedienbutton 43 für "Trockenlufterzeuger Kurven", ein Bedienbutton 43 für "System", ein Bedienbutton 43 für "Archiv" und ein Bedienbutton 43 für "Benutzer anmelden". Bei Betätigung eines der Bedienbuttons 43 öffnet sich eine weitere Seite auf dem Display 40, über die der Benutzer Eingaben für die Trocknung von Schüttgut 20 machen oder Information über die Trocknung von Schüttgut 20 abrufen kann. Ferner ist ein Button 43 für "Reset" vorgesehen.

**Figur 7** zeigt eine mögliche Ausführungsform der Eingabeseite 50 für die Materialdatenbank, die in der Datenbank 17 des Computers 3 hinterlegt ist. Auf der Eingabeseite 50 kann z.B. die Materialnummer, der Materialname, der Materialcode, die Solltemperatur zum Trocknen im Trocknungstrichter 10, das Temperaturfenster und die Solltemperatur, die minimale Trocknungszeit, die Absenktemperatur der Heizung 2, die Sollluftmenge und die Zeitdauer, nach der die Heizung 2 abgesenkt werden soll, eingegeben werden. Es ist selbstverständlich, dass die vorstehende Aufzählung nicht abschließend ist und nicht als Beschränkung der Erfindung aufgefasst werden kann.

**Figur 8** zeigt eine Überwachungsseite 60 zur Auswahl einzelner Trocknungstrichter $10_1$, $10_2$,..., $10_{10}$. Die Überwachungsseite 60 hat mehrere Gruppen-Buttons 61, mit denen verschiedene Gruppen von Trocknungstrichtern ausgewählt werden können. Bei der hier dargestellten Ausführungsform ist die erste Gruppe von zehn Trocknungstrichtern $10_1$, $10_2$,..., $10_{10}$ ausgewählt worden. In einzelnen Fenstern 62 werden die Trocknungstrichter $10_1$, $10_2$,..., $10_{10}$ auf der Überwachungsseite 60 dargestellt. Jedes Fenster 62 ist mit einem Rahmen 63 versehen, der mit einer farblichen Kennzeichnung versehen werden kann, die dem Benutzer den Status des jeweiligen Trocknungstrichters $10_1$, $10_2$,..., $10_{10}$ anzeigt. Ist der Rahmen 63 mit grüner Farbe gefüllt, zeigt dies an, dass der Trocknungstrichter in Betrieb und in Ordnung ist. Ist der Rahmen 63 mit gelber Farbe gefüllt, zeigt dies an, dass der Trocknungstrichter in außer Betrieb ist. Ist der Rahmen 63 mit roter Farbe gefüllt, zeigt dies an, dass der Trocknungstrichter keine Freigabe hat das Material bzw. das Schüttgut zur Verarbeitung zu transportieren. Ist der Rahmen 63 mit blauer Farbe gefüllt, zeigt dies an, dass bei dem Trocknungstrichter eine Temperaturabsenkung aktiv ist. Die gewählte und beschriebene farbliche Kennzeichnung soll nicht als eine Beschränkung der Erfindung aufgefasst werden.

Jedem einzelnen Fenster 62 ist eine Anzeige mit der Bezeichnung "Auslastung" zugeordnet, die die Auslastung des jeweiligen Trocknungstrichters, bezogen auf den Materialdurchsatz, anzeigt. Die Anzeige mit der Bezeichnung "Freigabe in" gibt die Zeit bis zur Freigabe der Materialförderung aus dem jeweiligen Trocknungstrichter zur Verarbeitung an. Ebenso ist eine weitere Anzeige 64 jedem einzelnen Fenster 62 zugeordnet, die den Materialnamen des Schüttguts im jeweiligen Trocknungstrichter $10_1$, $10_2$,..., $10_{10}$ anzeigt. Die hier gezeigte Darstellung der Überwachungsseite 60 ist lediglich eine von vielen Möglichkeiten und soll nicht als Beschränkung der Erfindung aufgefasst werden.

**Figur 9** zeigt eine detaillierte Überwachungsseite 70 (Satus, Funktion etc.) für einen ausgewählten, einzelnen Trocknungstrichter $10_1$, $10_2$,..., $10_N$. Hier werden zur Beschreibung der Erfindung zehn Trocknungstrichter $10_1$, $10_2$,..., $10_{10}$ dargestellt, was nicht als Beschränkung der Erfindung aufgefasst werden soll. Hier wurde aus der Überwachungsseite 60 (Figur 8) der Trocknungstrichter $10_{10}$ ausgewählt. Die Überwachungsseite 70 hat mehrere Fenster. Die hier gezeigte Zusammensetzung der Überwachungsseite 70 ist eine mögliche Ausführungsform und soll nicht als Beschränkung der Erfindung aufgefasst werden.

Das Fenster $71_1$ zeigt den Parameter der Anzahl der Zyklen (Förderzyklen) an, die für die Durchsatzberechnung herangezogen werden. Der Parameter kann von einem berechtigten Benutzer geändert werden. Die Anzahl der betrachteten Zyklen zur Durchsatzberechnung wird von der Steuerung 3 automatisch in Abhängigkeit des Volumens des Trocknungstrichters $10_1$, $10_2$,..., $10_N$ und des Volumens des Materialabscheiders 8 berechnet und kann nicht geändert werden. Ferner sind der aktuelle Materialdurchsatz und der maximale Durchsatz pro Stunde angegeben.

Das Fenster $71_2$ zeigt die Ist-Luftmenge an, die durch den Trocknungstrichter $10_{10}$ gefördert wird und die Soll-Luftmenge, die für den Trocknungstrichter $10_{10}$ erforderlich ist, um die Trocknung des Schüttguts im Trocknungstrichter $10_{10}$ zu gewährleisten.

Das Fenster $71_3$ zeigt die Soll-Temperatur an, mit der die Luft oder das Gas dem Trocknungstrichter $10_{10}$ zugeführt werden soll. Ebenso werden in mit Skalen versehenen Balkendiagrammen die Temperatur des Vorlaufs, die Temperatur einer Sicherheit und die Temperatur des Rücklaufs angegeben. Zusätzlich ist die aktuelle Heizleistung der Heizung 2 numerisch angegeben und auch mit einer Skala visualisiert.

Das Fenster $71_4$ zeigt die Zeitabstände zwischen den zehn Förderzyklen in dem Trocknungstrichter $10_{10}$ an.

Das Fenster $71_5$ informiert numerisch über den aktuellen Materialdurchsatz des Trocknungstrichters $10_{10}$. Ebenso ist der aktuelle Materialdurchsatz mit einer Skala visualisiert. Zur schnelleren visuellen Erfassung findet ein Farbwechsel der Skala bei einem Wechsel zwischen festgelegten prozentualen Auslastungsbereichen statt. Zum Beispiel ist die Farbe der Skala grün, wenn sich die Auslastung im Bereich von 0 bis 80 Prozent befindet. Die Farbe der Skala ist gelb, wenn sich die Auslastung im Bereich zwischen 80 und 100 Prozent befindet. Die Farbe der Skala ist rot, wenn sich die Auslastung über 100 Prozent befindet.

Das Fenster $71_6$ zeigt eine graphische Darstellung des Trocknungstrichters $10_{10}$ mit dem zugeordneten Materialabscheider. Der graphischen Darstellung des Trocknungstrichters $10_{10}$. sind mehrere farblich kennzeichenbare Indikatoren 72 zugeordnet, die den Zustand der Förderung in den Materialabscheider, den Füllstand im Materialabscheider und den Zustand des Materialdurchsatzes angeben. Bei der hier dargestellten Situation bedeutet eine gelbe Kennzeichnung, dass die Förderung in dem Materialabscheider aktiv ist. Eine grüne Kennzeichnung des Füllstands im Materialabscheider bedeutet, dass der Füllstand in Ordnung ist. Eine grüne Kennzeichnung des Zustands des Materialdurchsatzes bzw. der Freigabe des Materials bedeutet, dass der Materialdurchsatz bzw. die Freigabe in Ordnung ist bzw. die Freigabe des Materials erfolgt ist.

Das Fenster $71_7$ gibt das Volumen im Materialabscheider und das Volumen im Trocknungstrichter an. Das Fenster $71_8$ gibt die Materialquelle an, aus der Material in den Trocknungstrichter $10_{10}$ bzw. in den zugeordneten Materialabscheider gefördert wird.

Das Fenster $71_9$ informiert über die Material- und Trocknungsparameter des Materials im Trocknungstrichter $10_{10}$.

Ferner sind mehrere Buttons 73 auf der Überwachungsseite 70 dargestellt, mit denen eine Reihe von Funktionen des Trocknungstrichters $10_{10}$ ausgewählt werden können. Über Scroll-Buttons 74 können noch weitere Funktionen für den Trocknungstrichter $10_{10}$ ausgewählt werden.

**Figur 10** zeigt eine Förderstatistikseite 80 für den ausgewählten Trocknungstrichter $10_{10}$. Mit dem Zurück-Button 82 gelangt man wieder zurück zur Überwachungsseite 70. In einem Fenster $81_1$ werden der aktuelle Materialdurchsatz und der maximale Durchsatz angegeben. Für die Berechnung des Materialdurchsatzes werden bei dieser Ausführungsform die letzten fünf Förderzyklen verwendet. Es ist selbstverständlich, dass die Anzahl der Förderzyklen je nach Größe des Materialabscheiders 8 im Verhältnis zum Trockentrichter $10_{10}$ variiert. Im Fenster $81_2$ ist eine graphische Anzeige der Auslastung des Trocknungstrichters $10_{10}$ dargestellt. Im Fenster $81_3$ sind die einzelnen Förderzyklen, deren zeitlichen Abstände, die Dauer eines jeden einzelnen Förderzyklus, die Standby-Zeit für jeden Förderzyklus und die Fehlerzeit für jeden Förderzyklus dargestellt. Ebenso ist im Fenster $81_4$ nochmals die graphische Darstellung des Trocknungstrichters $10_{10}$ aus Figur 9 dargestellt.

Die **Figur 11** und die **Figur 12** zeigen jeweils Kurvenseiten 90. In den Figuren 11 und 12 stellt die Kurve 91 den zeitlichen Verlauf der Auslastung eines ausgewählten Trocknungstrichters dar, und die Kurve 92 stellt den zeitlichen Verlauf der Vorlauftemperatur (Temperatur der Gas- bzw. Luftmenge, die zum Trocknungstrichter transportiert wird) dar. Figur 11 zeigt, wie aus der Kurve 91 zu erkennen ist, eine sehr aktive Auslastung des jeweiligen Trocknungstrichters. Die Kurve 92 für die Vorlauftemperatur bleibt dabei auf einem konstanten und auch geforderten Niveau. Figur 12 zeigt, dass der Trocknungstrichter auch in einen Standby gefahren werden kann. Wenn, wie in Figur 12 dargestellt, die Auslastung des Trocknungstrichters für eine bestimmte Zeitspanne Z abfällt, wird die Vorlauftemperatur abgesenkt. Bei der Darstellung der Figur 12 wird die Absenkung der Vorlauftemperatur zweimal durchgeführt. Eine Absenkung in den Standby-Betrieb erfolgt nur, wenn die unterste Schicht bereits erfolgreich getrocknet worden ist.

Die Erfindung wurde in Bezug auf eine bevorzugte Ausführungsform beschrieben. Es ist für einen Fachmann selbstverständlich, dass Änderungen und Abwandlungen gemacht werden können, ohne dabei den Schutzbereich der nachstehenden Ansprüche zu verlassen.

**Bezugszeichenliste**

| | |
|---|---|
| 1 | Trockengaserzeuger |
| 2 | Heizung |
| $2_T$ | Temperatursensor |
| 3 | Computer |
| 4 | Stellklappe |
| $4_A$ | Aktuator |
| 5 | Unterdruckpumpe |
| 6 | Durchflusssensor |
| 7 | Füllstandsensor |
| 8 | Materialabscheider |
| 9 | Reservoir |
| $9_1, 9_2,...,9_M$ | Reservoir |
| 10 | Trocknungstrichter |
| $10_1, 10_2,..., 10_N$ | Trocknungstrichter |
| 11 | erste Leitung |
| 12 | zweite Leitung |
| 13 | steuerbares Ventil |
| 14 | Materialleitung |
| 15 | steuerbares Ventil |
| 16 | Materialabsaugkasten |
| 17 | Datenbank, Speicher |
| 18 | Verbraucher |
| 19 | Materialleitung |
| 20 | Schüttgut |
| $20_1, 20_2,..., 20_M$ | Schüttgut |
| 21 | erste Kommunikationsverbindung |
| 22 | zweite Kommunikationsverbindung |
| 23 | Gebläse |
| 24 | Taupunkt-und Durchflusssensor |
| 25 | Unterdruckleitung |
| $30_1, 30_2,..., 30_K$ | Schicht des Schüttguts |
| 31 | Schüttkegel |
| 32 | Materialklappe |
| 34 | Leitung |
| 36 | Filter |
| 38 | Interface |
| 40 | Display |
| 41 | Startseite |
| 42 | Fenster |
| 43 | Button |
| 50 | Eingabeseite |
| 60 | Überwachungsseite |
| 61 | Gruppen-Button |
| 62 | Fenster |
| 63 | Rahmen |
| 64 | Anzeige |

| | |
|---|---|
| 70 | Überwachungsseite |
| $71_7$ | Fenster |
| $71_2$ | Fenster |
| $71_3$ | Fenster |
| $71_4$ | Fenster |
| $71_5$ | Fenster |
| $71_6$ | Fenster |
| $71_7$ | Fenster |
| $71_8$ | Fenster |
| $71_9$ | Fenster |
| 72 | Indikator |
| 73 | Button |
| 74 | Scroll-Button |
| 80 | Förderstatistikseite |
| $81_1$ | Fenster |
| $81_2$ | Fenster |
| $81_3$ | Fenster |
| $81_4$ | Fenster |
| 82 | Zurück-Button |
| 90 | Kurvenseite |
| 91 | Kurve |
| 92 | Ku rve |
| 95 | oberer Bereich |
| 100 | Anlage |
| $t_1, t_2, ..., t_K$ | Zeitpunkt |
| Z | Zeitspanne |

**Patentansprüche**

1. Steuerung für eine Anlage (100) zum Entfeuchten von Schüttgut (20) aus Kunststoff mittels mindestens einem Trocknungstrichter (10, $10_1$, $10_2$, ... $10_N$), wobei jeder Trocknungstrichter (10, $10_1$, $10_2$, ... $10_N$) mit einer ersten Leitung (11) für eine Zufuhr von getrocknetem Gas und mit einer zweiten Leitung (12) für eine Ableitung von mit Feuchtigkeit beladenem Gas aus dem mindestens einen Trocknungstrichter (10, $10_1$, $10_2$, ... $10_N$) versehen ist und einer Heizung (2), die in der ersten Leitung (11) jedem Trocknungstrichter (10, $10_1$, $10_2$, ... $10_N$) vorgeordnet ist, **gekennzeichnet durch**:

   - einen Computer (3) mit einer zugeordneten Datenbank (17); und
   - ein Display (40), das dem Computer (3) zugeordnet ist,

     - wobei über eine Überwachungsseite (60) der jeweilige Status der mehreren Trocknungstrichter ($10_1$, $10_2$,..., $10_{10}$), der von der Steuerung ermittelbar ist, als eine farbliche Kennzeichnung_den dargestellten Trocknungstrichtern ($10_1$, $10_2$,..., $10_{10}$) zugeordnet ist; und
     - über eine detaillierte Überwachungsseite (70) ein Betriebszustand eines ausgewählten Trocknungstrichters ($10_1$, $10_2$,..., $10_{10}$) anhand der Daten von mehreren Sensoren ($2_T$, 6, 7), die über eine erste Kommunikationsverbindung (21) mit dem Computer (3) sendend verbunden sind und anhand der Daten mehrerer Aktuatoren (2, $4_A$, 13, 15), die über eine zweite Kommunikationsverbindung (22) mit dem Computer (3) empfangend verbunden sind, visualisierbar ist.

2. Steuerung nach Anspruch 1, wobei einer der Sensoren ein Temperatursensor ($2_T$) ist, der der Heizung (2) zugeordnet ist und die Temperatur des dem jeweiligen Trocknungstrichters ($10_1$, $10_2$,..., $10_N$) über die erste Leitung (11) zugeführten Gases bestimmt; und einer der Sensoren ein Durchflusssensor (6) ist, der die dem jeweiligen Trocknungstrichter ($10_1$, $10_2$,..., $10_N$) über die erste Leitung (11) zugeführte Gasmenge bestimmt; und einer der Sensoren ein Füllstandsensor (7) ist, der einem Materialabscheider (8) des jeweiligen Trocknungstrichters ($10_1$, $10_2$,..., $10_N$) zugeordnet ist und eine komplette Befüllung des Materialabscheiders (8) bestimmt.

3. Steuerung nach Anspruch 1, wobei einer der Aktuatoren eine Heizung (2) ist, die auf Anforderung vom Computer (3) die Temperatur des dem jeweiligen Trocknungstrichters ($10_1$,$10_2$,..., $10_N$) über die erste Leitung (11) zugeführten Gases einstellt; und einer der Aktuatoren ein Aktuator ($4_A$) für eine Stellklappe (4) ist, die auf Anforderung vom Computer (3) automatisch verstellbar ist, um eine dem jeweiligen Trocknungstrichter ($10_1$,$10_2$,..., $10_N$) über die erste Leitung (11) zugeführte Gasmenge zu regulieren; und einer der Aktuatoren ein steuerbares Ventil (13) ist, das in einer Materialleitung (14) von einem Reservoir ($9_1$, $9_2$,...,$9_N$ ) für das Schüttgut ($20_1$, $20_2$, ..., $20_M$) zum Materialabscheider (8) vorgesehen und vom Computer (3) steuerbar ist; und einer der Aktuatoren ein steuerbares Ventil (15) ist, das in einer Materialleitung (19) von einem Materialabsaugkasten (16) des jeweiligen Trocknungstrichters ($10_1$, $10_2$,..., $10_{10}$) zu einem Verbraucher (18) für das Schüttgut ($20_1$, $20_2$, ..., $20_M$) vorgesehen und vom Computer (3) steuerbar ist.

**4.** Steuerung nach Anspruch 3, wobei mindestens eine Unterdruckpumpe (5) mit dem Materialabscheider (8) eines jeden Trocknungstrichters (10, $10_1$, $10_2$, ... $10_N$) über eine Unterdruckleitung (25) fluid verbunden ist und der Materialabscheider (8) über eine Materialleitung (14) mit mindestens einem der Reservoirs ($9_1$, $9_2$,...,$9_M$) für Schüttgut (20, $20_1$, $20_2$,..., $20_M$) verbunden ist, wobei mittels dem steuerbaren Ventil (13) über die zweite Kommunikationsverbindung (22) vom Computer (3) der Transport von Schüttgut (20, $20_1$, $20_2$,..., $20_M$) in den Trocknungstrichter steuerbar ist.

**5.** Steuerung nach einem der vorangehenden Ansprüche, wobei die erste Leitung (11) für eine Zufuhr von getrocknetem Gas zu mindestens einem Trocknungstrichter (10, $10_1$, $10_2$, ... $10_N$) und die zweiten Leitung (12) für die Ableitung von mit Feuchtigkeit beladenem Gas aus dem mindestens einen Trocknungstrichter (10, $10_1$, $10_2$, ... $10_N$) mit mindestens einem Trockengaserzeuger (1) verbunden sind, dem ein steuerbares Gebläse (23) und ein Taupunktsensor (24) zugeordnet sind und wobei der Computer (3) über eine erste Kommunikationsverbindung (21) mit dem Gebläse (23) und der Taupunktsensor (24) über die zweite Kommunikationsverbindung (22) mit dem Computer (3) verbundensind.

**6.** Steuerung nach einem der vorangehenden Ansprüche, wobei mittels des Computers (3) über eine Zeitdauer der Öffnung des Aktuators, der ein steuerbares Ventil (15) zu einem Verbraucher ist, die Menge des aus einem Materialabsaugkasten (16) des jeweiligen Trocknungstrichters ($10_1$, $10_2$,..., $10_{10}$) entnommenen Schüttguts ($20_1$, $20_2$,..., $20_M$) bestimmbar ist und wobei eine entsprechende Menge des Schüttguts ($20_1$, $20_2$,..., $20_M$) über den Materialabscheider (8) dem jeweiligen Trocknungstrichter ($10_1$, $10_2$,..., $10_{10}$) zuführbar ist, so dass der Trocknungstrichter ($10_1$, $10_2$,..., $10_{10}$) immer komplett befüllt ist.

**7.** Steuerung nach Anspruch 6, wobei mit dem Computer (3) ein Zeitpunkt der Befüllung einer jeden Schicht ($30_1$, $30_2$,..., $30_K$) im jeweiligen Trocknungstrichter ($10_1$, $10_2$,..., $10_N$) und eine Verweildauer der einzelnen Schichten $30_1$, $30_2$,..., $30_K$) im jeweiligen Trocknungstrichter ($10_1$, $10_2$,..., $10_N$) protokollierbar sind, wobei Fehlerzeiten mit der Verweildauer der einzelnen Schichten ($30_1$, $30_2$,..., $30_6$) verrechenbar sind, so dass das steuerbare Ventil (15) zum Verbraucher (18) freigebbar ist, wenn eine unterste Schicht ($30_K$) im jeweiligen Trocknungstrichter ($10_1$, $10_2$,..., $10_N$) die für die Entfeuchtung erforderliche Verweildauer hat und einer erforderlichen Soll-Gasmenge zum Entfeuchten ausgesetzt war.

**8.** Computerprogrammprodukt, wobei das Computerprogrammprodukt auf einem nicht-flüchtigen und computerlesbaren Medium bereitgestellt ist und einen Computer (3) für eine Anlage (100) zum Entfeuchten von Schüttgut (20), insbesondere von Schüttgut (20) aus Kunststoff, veranlasst, eine Steuerung der Anlage (100) auszuführen, wobei die Steuerung folgenden Schritte umfasst:

- dass mittels mehrerer Sensoren ($2_T$, 6, 7) verschiedene Betriebszustände mindestens eines Trocknungstrichters ($10_1$, $10_2$,..., $10_N$) der Anlage (100) durch den Computer (3) erfasst werden;
- dass mittels mehrerer Aktuatoren (2, $4_A$, 13, 15) Einstellungen der Anlage durch den Computer (3) vorgenommen werden;
- dass der Computer (3) den zeitlichen Verlauf der verschiedenen Betriebszustände und einen zeitlichen Verlauf der Trocknungsparameter für das Schüttgut (20) im jeweiligen Trocknungstrichter ($10_1$, $10_2$,..., $10_N$) aufzeichnet;
- dass der Computer (3) anhand der vorgenommen Einstellungen einen Zeitpunkt der Befüllung einer jeden Schicht ($30_1$, $30_2$,..., $30_K$) in dem jeweiligen Trocknungstrichter ($10_1$, $10_2$,..., $10_N$) und eine Verweildauer der einzelnen Schichten ($30_1$, $30_2$,..., $30_K$) im jeweiligen Trocknungstrichter ($10_1$, $10_2$,..., $10_N$) protokolliert; und
- dass der Computer (3) anhand des zeitlichen Verlaufs der Trocknungsparameter und der Verweildauer der einzelnen Schichten ($30_1$, $30_2$,..., $30_K$) im jeweiligen Trocknungstrichter ($10_1$, $10_2$,..., $10_N$) ermittelt, ob eine für das Schüttgut (20) vorgegebene Soll-Trocknungsdauer erreicht ist und für das Schüttgut (20) eine Freigabe zu einem Verbraucher (18) erteilt wird.

**9.** Computerprogrammprodukt nach Anspruch 8, wobei einer der Sensoren ein Temperatursensor ($2_T$) einer Heizung (2) ist, mit dem die Temperatur eines dem jeweiligen Trocknungstrichter ($10_1$, $10_2$,..., $10_N$) zugeführten Gases bestimmt wird, wobei einer der Sensoren ein Durchflusssensor (6) ist, mit dem eine dem jeweiligen Trocknungstrichter ($10_1$, $10_2$,..., $10_N$) zugeführte Gasmenge bestimmt wird, und wobei einer der Sensoren ein Füllstandsensor (7) ist, der einem Materialabscheider (8) des jeweiligen Trocknungstrichters ($10_1$, $10_2$,..., $10_N$) zugeordnet ist und mit dem die Befüllung des Materialabscheiders (8) bestimmt wird.

**10.** Computerprogrammprodukt nach Anspruch 8 und 9, wobei einer der Aktuatoren eine Heizung (2) ist, die vom Computer (3) zum An- oder Abschalten angesteuert wird, wenn die bestimmte Temperatur des zugeführten Gases außerhalb eines definierten Toleranzbereichs einer Soll-Temperatur liegt, wobei einer der Aktuatoren ein Aktuator ($4_A$) für eine automatisch verstellbare Stellklappe (4) ist, die vom Computer angesteuert wird, um eine mindestens einem Trocknungstrichter ($10_1$, $10_2$,..., $10_N$) zugeführte Gasmenge in Abhängigkeit der den restlichen Trocknungstrichtern ($10_1$, $10_2$,..., $10_N$) zugeführten Gasmenge zu regulieren, wobei einer der Aktuatoren ein steuerbares Ventil (13) ist, das in einer Materialleitung (14) vom einem Reservoir ($9_1$, $9_2$,...,$9_N$ ) für das Schüttgut ($20_1$, $20_2$,..., $20_M$) zum Materialabscheider (8) vorgesehen ist und vom Computer (3) gesteuert wird und wobei einer der Aktuatoren ein steuerbares Ventil (15) ist, das in einer Materialleitung (19) von einem Materialabsaugkasten (16) des jeweiligen Trocknungstrichter ($10_1$, $10_2$,..., $10_{10}$) zu einem Verbraucher (18) für das Schüttgut ($20_1$, $20_2$, ..., $20_M$) vorgesehen ist und vom Computer (3) gesteuert wird.

**11.** Computerprogrammprodukt nach Anspruch 10, wobei einige der Trocknungstrichter ($10_1$, $10_2$, ..., $10_N$) vom Computer (3) in einen Standby-Modus gefahren werden, wenn durch die durch den Aktuator ($4_A$) automatisch eingestellte Stellung der Stellklappen (4) und der Temperatur der Heizungen (2) in der ersten Leitung (11) zu den jeweils anderen Trocknungstrichtern ($10_1$, $10_2$, ..., $10_N$) die Gasmenge und die Temperatur nicht ausreichen, um eine Entfeuchtung des Schüttguts (20) im jeweils bevorzugten Trocknungstrichter ($10_1$, $10_2$, ..., $10_N$) in einer bestimmten Zeit zu erreichen.

**12.** Computerprogrammprodukt nach Anspruch 10, wobei in der Materialleitung (14) vom Reservoir (9, $9_1$, $9_2$,...,$9_M$) zum Materialabscheider (8) das steuerbare Ventil (13) vorgesehen ist, das durch den Computer (3) gesteuert wird, damit die Förderung des Schüttguts (20, $20_1$, $20_2$,...$20_M$) freigegeben oder unterbunden wird.

**13.** Computerprogrammprodukt nach Anspruch 10, wobei in der Materialleitung (19) vom Materialabsaugkasten (16) zum Verbraucher (18) das steuerbare Ventil (15) vorgesehen ist, das durch den Computer (3) gesteuert wird, damit die Förderung des Schüttguts (20, $20_1$, $20_2$,...$20_M$) freigegeben oder unterbunden wird wenn die noch verbleibende Trocknungszeit für eine noch im Trocknungstrichter (10, $10_1$, $10_2$, ..., $10_N$) befindliche unterste Schicht (30u) des Schüttguts ($20_1$, $20_2$,..., $20_M$) nicht ausreicht, um einen Soll-Feuchtegehalt des Schüttguts ($20_1$, $20_2$,..., $20_M$) der untersten Schicht ($30_U$) einzustellen.

**14.** Computerprogrammprodukt nach einem der Ansprüche 8 bis 13, wobei der Computer (3) Daten aus einem zugeordneten Speicher (17) abruft, mittels denen Stell- und Regelgrößen der Anlage (100) berechnet werden.

**15.** Computerprogrammprodukt nach einem der Ansprüche 10 bis 13, wobei der Computer (3) eine Auslastung eines oder mehrerer der Trocknungstrichter ($10_1$, $10_2$,..., $10_N$) ermittelt und bei einer Auslastung, die unter einen vorbestimmten Wert fällt, zumindest die Leistung der Heizung (2) für eine bestimmte Zeitspanne senkt.

**Geänderte Patentansprüche gemäss Regel 137(2) EPÜ.**

**1.** Hydraulikmodul (200; 400) mit einem druckgesteuerten 2-Wege-Stromregelventil (220; 420), das in einer Versorgungsleitung (205; 405) des Hydraulikmoduls (200; 400) angeordnet ist, wobei das druckgesteuerte 2-Wege-Stromregelventil (220; 420) durch ein erstes Vorspannelement (222; 422) in Auf-Steuerrichtung vorgespannt ist, wobei ein erstes Drucksignal, das stromabwärts bzw. stromaufwärts des druckgesteuerten 2-Wege-Stromregelventils (220; 420) in der Versorgungsleitung (205; 405) abgegriffen wird, über eine erste Steuerleitung (223; 423) an das druckgesteuerten 2-Wege-Stromregelventil (220; 430) entsprechend in Zu-Steuerrichtung bzw. Auf-Steuerrichtung anlegbar ist, wobei in der ersten Steuerleitung (223; 423) zur Drucksteuerung des druckgesteuerten 2-Wege-Stromregelventils (220; 420) eine Regeleinrichtung (230; 430) angeordnet ist, wobei die Regeleinrichtung (230; 430) konfiguriert ist, in einem ersten Regelzustand (232; 432) ein Anlegen des ersten Drucksignals an das druckgesteuerte 2-WegeStromregelventil (220; 420) zu blockieren, während das erste Drucksignal in einem zweiten Regelzustand (234; 434) durch die Regeleinrichtung (230; 430) an das druckgesteuerte 2-Wege-Stromregelventil (220; 420) anlegbar ist, **dadurch gekennzeichnet, dass** die Regeleinrichtung (230; 430) ein druckgesteuertes 2-Wegeventil (230; 430) umfasst, das durch ein zweites Vorspannelement (235; 435) vorgespannt ist, wobei das druckgesteuerte 2-Wegeventil (230; 430) im ersten Regelzustand (232; 432) Zu-gesteuert ist, während es im zweiten Regelzustand (234; 434) Auf-gesteuert ist, so dass das erste Drucksignal bei aufgesteuertem druckgesteuerten 2-Wegeventil (230; 430) an das druckgesteuerte 2-Wege-Stromregelventil (220; 420) anlegbar ist.

**2.** Hydraulikmodul (400) nach Anspruch 1, wobei die erste Steuerleitung (423) stromaufwärts des druckgesteuerten 2-Wege-Stromregelventils (420) in der Versorgungsleitung (405) abgegriffen wird, das Hydraulikmodul (400) ferner umfassend eine erste Meldeleitung (424), die stromaufwärts der Regeleinrichtung (430) in der ersten Steuerleitung (423) abgezweigt ist, wobei die Regeleinrichtung abhängig von einem durch die erste Meldeleitung (424) abgegriffenem Drucksignal in den ersten oder zweiten Regelzustand schaltbar ist.

**3.** Hydraulikmodul (200) nach Anspruch 1, wobei die erste Steuerleitung (223) stromabwärts des druckgesteuerten 2-Wege-Stromregelventils (220) in der Versorgungsleitung (205) abgegriffen wird, das Hydraulikmodul (200) ferner umfassend eine zweite Steuerleitung (211), die mit der Versorgungsleitung (205) stromaufwärts des druckgesteuerten 2-Wege-Stromregelventils (220) verbunden ist, wobei die Regeleinrichtung (230) abhängig von einem durch die zweite Steuerleitung (211) abgegriffenen zweiten Drucksignal in den zweiten Regelzustand (234) schaltbar ist.

**4.** Hydraulikmodul (200) nach Anspruch 3, wobei das zweite Drucksignal über die zweite Steuerleitung (211) an das druckgesteuerte 2-Wegeventil (230) in Auf-Steuerrichtung anlegbar ist.

**5.** Hydraulikmodul (200; 400) nach einem der Ansprüche 1 bis 4, ferner umfassend eine dritte Steuerleitung (LS2; LS3), die mit der Versorgungsleitung (205; 405) stromabwärts des druckgesteuerten 2-Wege-Stromregelventils (220; 420) verbunden ist, wobei ein drittes Drucksignal über die dritte Steuerleitung (LS2; LS3) an das druckgesteuerte 2-Wege-Stromregelventil (220; 420) in Auf-Steuerrichtung anlegbar ist.

**6.** Hydraulikmodul (200) nach Anspruch 5 in Kombination mit Anspruch 2, ferner umfassend eine vierte Steuerleitung (228), die mit der dritten Steuerleitung (LS2) verbunden ist, wobei das dritte Drucksignal über die vierte Steuerleitung (228) an die Regeleinrichtung (230) anlegbar ist und die Regeleinrichtung abhängig von dem dritten Drucksignal in den ersten Regelzustand (232) schaltbar ist.

**7.** Hydraulikmodul (200) nach Anspruch 5 oder 6 in Kombination mit Anspruch 2, wobei das dritte Drucksignal an das druckgesteuerte 2-Wege-Stromregelventil (220) im ersten Regelzustand (232) der Regeleinrichtung (230) in Zu-Steuerrichtung anlegbar ist.

**8.** Hydraulikmodul (100) nach einem der Ansprüche 1 bis 7, ferner umfassend einen Proportional- Wegeschieber (110), der in der Versorgungsleitung (105) stromabwärts des druckgesteuerten 2-Wege-Stromregelventils (120) angeordnet ist.

**9.** Hydraulikmodul (100) nach Anspruch 8 in Kombination mit einem der Ansprüche 6 bis 8, wobei das erste Drucksignal stromaufwärts des Proportional-Wegeschiebers (110) abgegriffen wird und das dritte Drucksignal stromabwärts des Proportional-Wegeschiebers (110) abgegriffen wird.

**10.** Hydraulikmodul (200) nach einem der Ansprüche 1 bis 9, wobei das 2-WegeStromregelventil (220) und die Regeleinrichtung (230) in einen Ventilblock integriert sind.

**11.** Hydraulikmodul (200) nach einem der Ansprüche 1 bis 10, wobei die Regeleinrichtung (230) lediglich den ersten und zweiten Regelzustand (232, 234) als zwei diskrete Schaltstellungen aufweist.

**12.** Hydraulikmodul (200), nach einem der Ansprüche 1 bis 12, wobei die Regeleinrichtung (230) ein einstellbares Vorspannelement (235) umfasst, durch das die Regeleinrichtung (230) in den ersten Regelzustand (232) vorgespannt ist.

**13.** Hydraulikmodulsystem, umfassend mindestens zwei Hydraulikmodule, wobei nur eines der mindestens zwei Hydraulikmodule gemäß dem Hydraulikmodul (200) nach einem der Ansprüche 1 bis 12 ausgebildet ist.

1/12

15. Juni 201

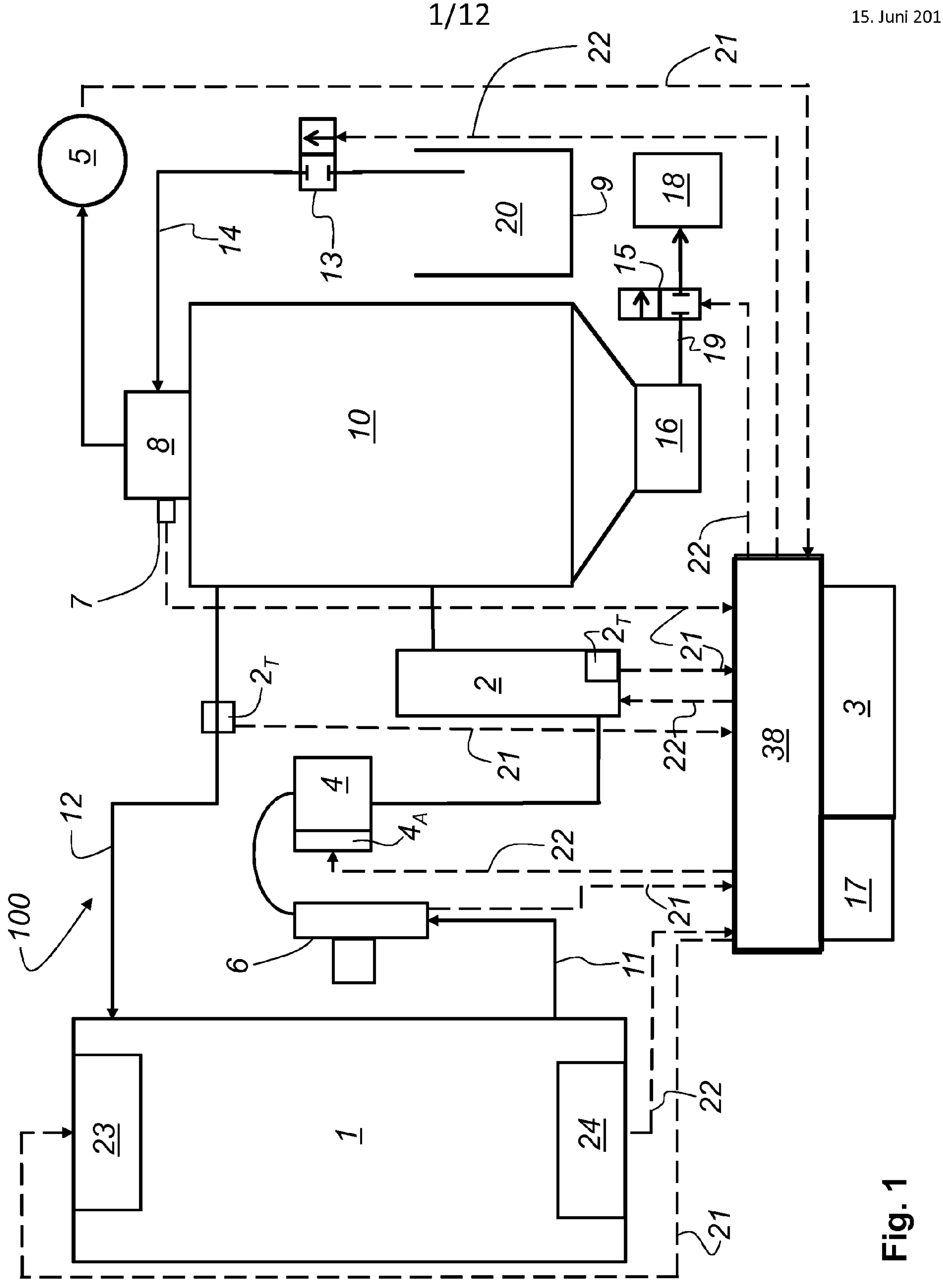


Fig. 1

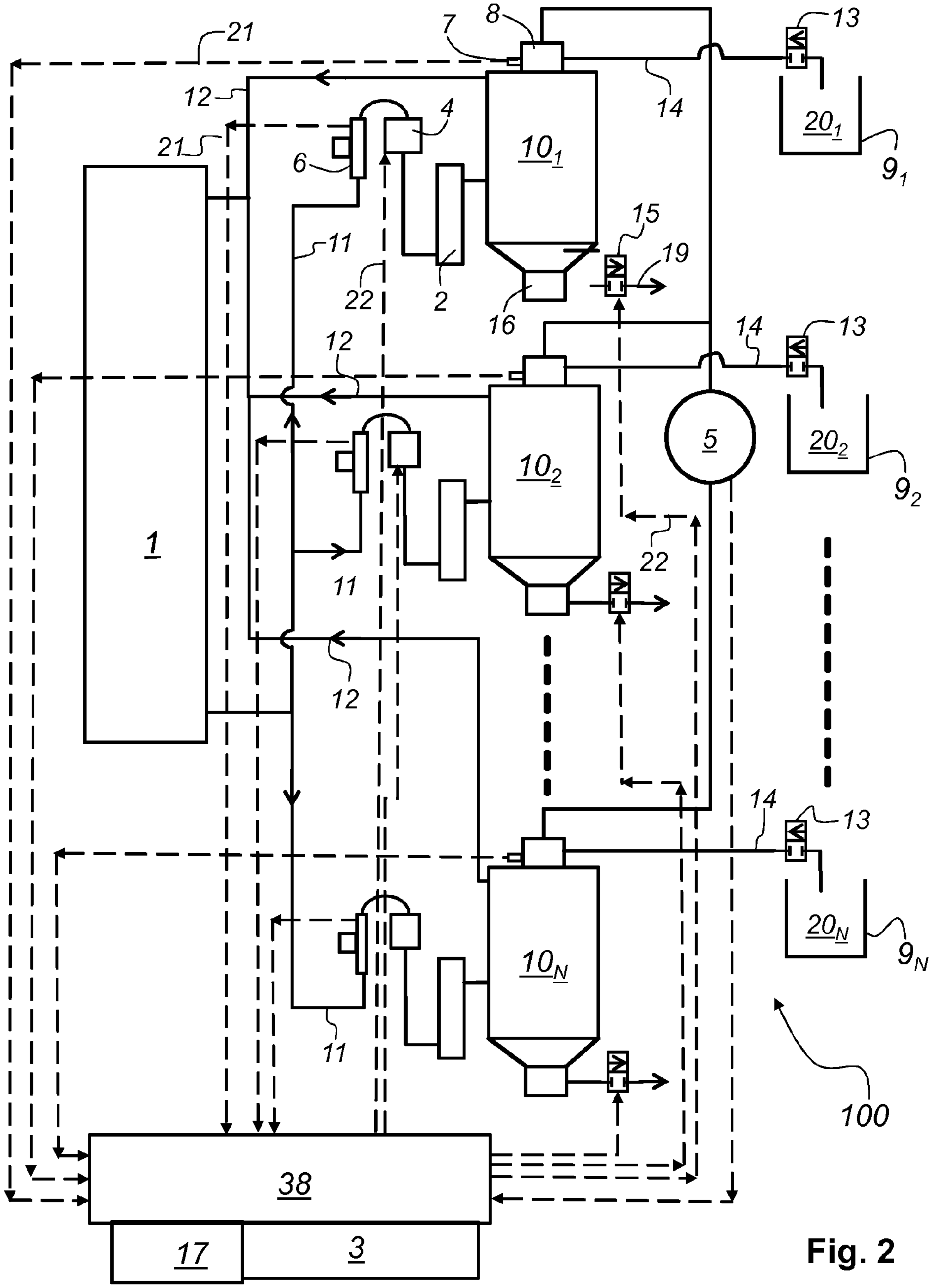

8
7
21
12
21
6
4
14
13
$10_1$
$20_1$
$9_1$
11
22
2
16
15
19
12
14
13
5
$10_2$
$20_2$
$9_2$
1
11
22
12
14
13
$10_N$
$20_N$
$9_N$
11
100
38
17
3


Fig. 2

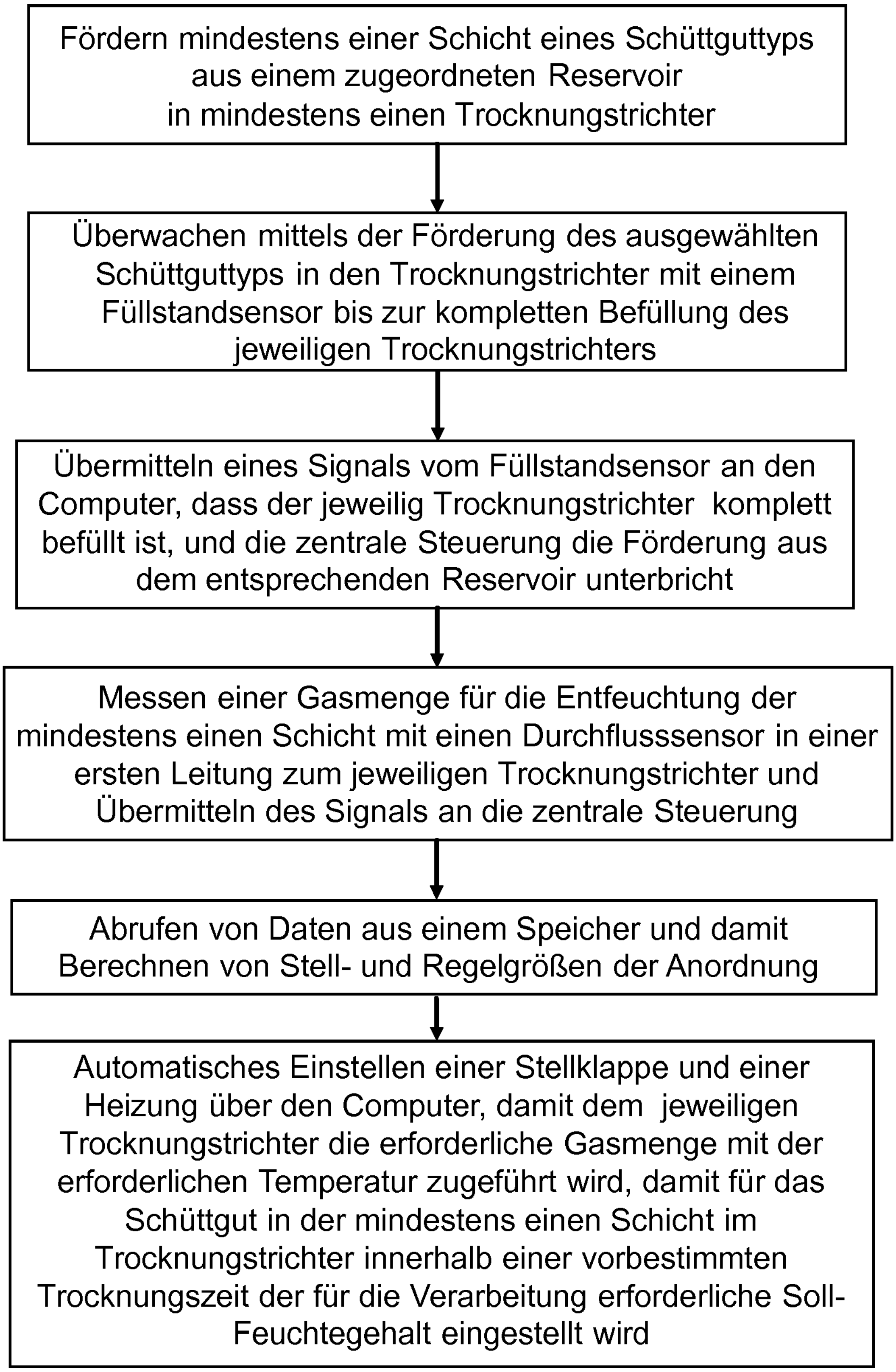
Fördern mindestens einer Schicht eines Schüttguttyps aus einem zugeordneten Reservoir in mindestens einen Trocknungstrichter
Überwachen mittels der Förderung des ausgewählten Schüttguttyps in den Trocknungstrichter mit einem Füllstandsensor bis zur kompletten Befüllung des jeweiligen Trocknungstrichters
Übermitteln eines Signals vom Füllstandsensor an den Computer, dass der jeweilig Trocknungstrichter komplett befüllt ist, und die zentrale Steuerung die Förderung aus dem entsprechenden Reservoir unterbricht
Messen einer Gasmenge für die Entfeuchtung der mindestens einen Schicht mit einen Durchflusssensor in einer ersten Leitung zum jeweiligen Trocknungstrichter und Übermitteln des Signals an die zentrale Steuerung
Abrufen von Daten aus einem Speicher und damit Berechnen von Stell- und Regelgrößen der Anordnung
Automatisches Einstellen einer Stellklappe und einer Heizung über den Computer, damit dem jeweiligen Trocknungstrichter die erforderliche Gasmenge mit der erforderlichen Temperatur zugeführt wird, damit für das Schüttgut in der mindestens einen Schicht im Trocknungstrichter innerhalb einer vorbestimmten Trocknungszeit der für die Verarbeitung erforderliche Soll-Feuchtegehalt eingestellt wird

Fig. 3

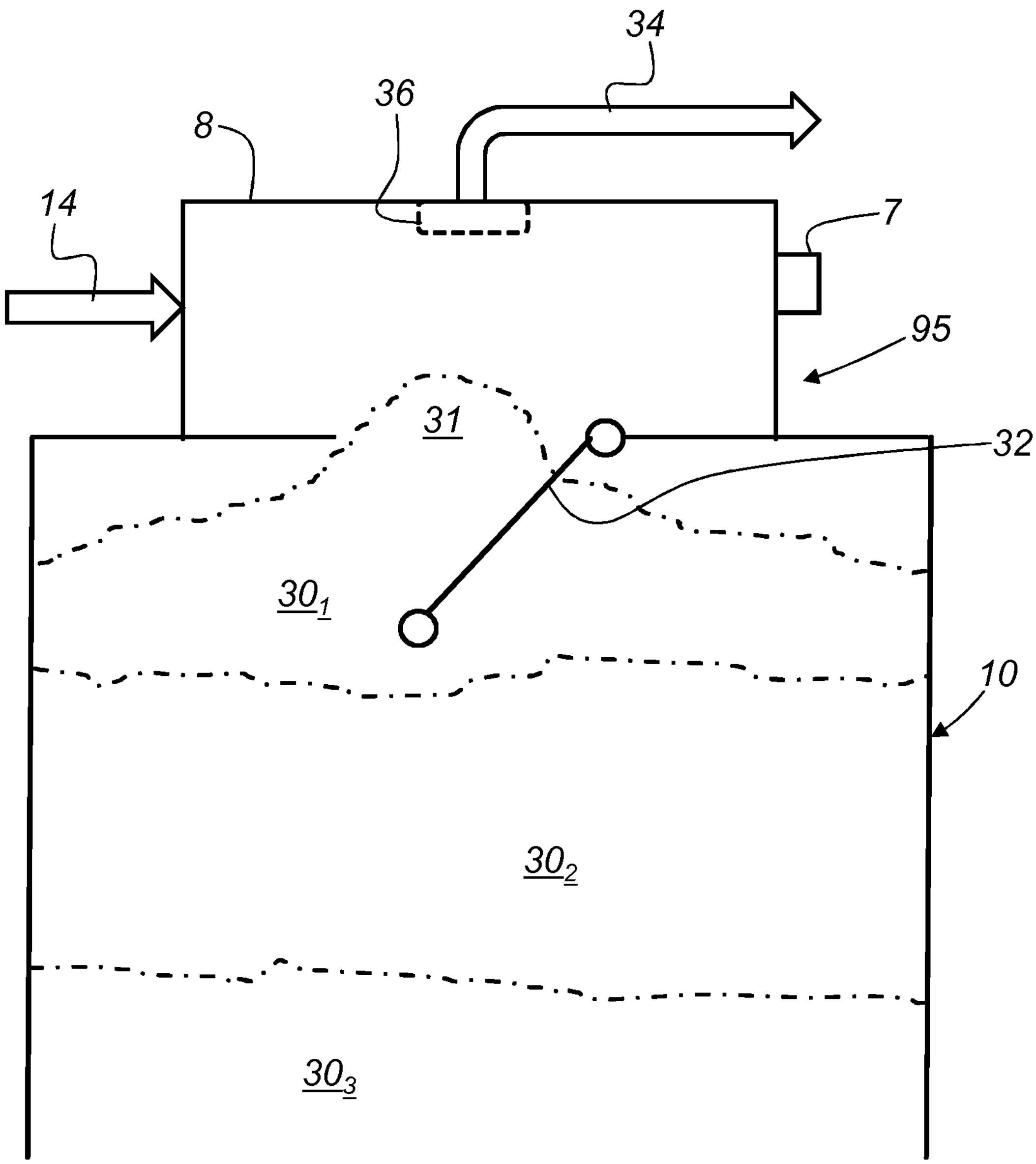


Fig. 4

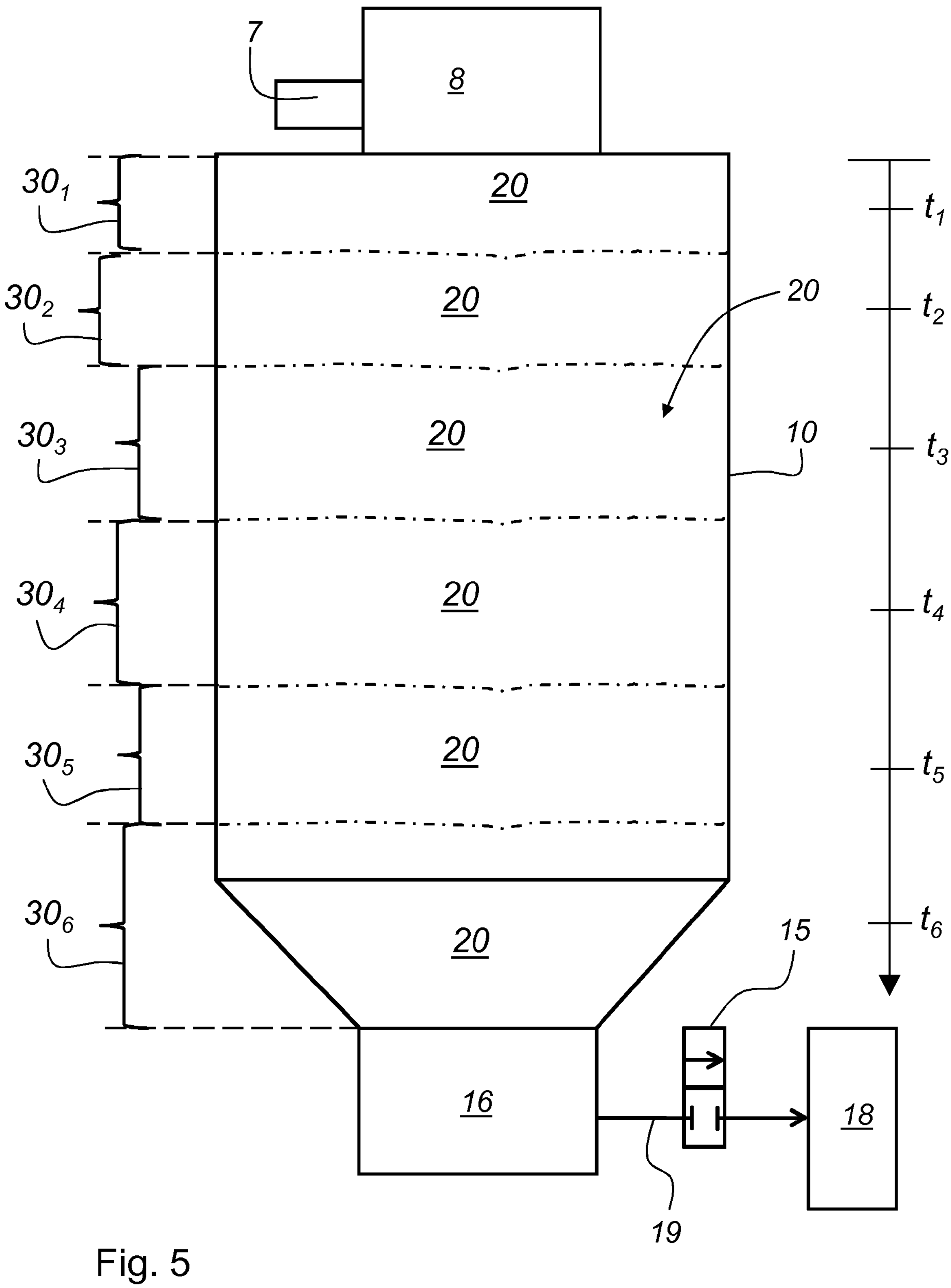


Fig. 5

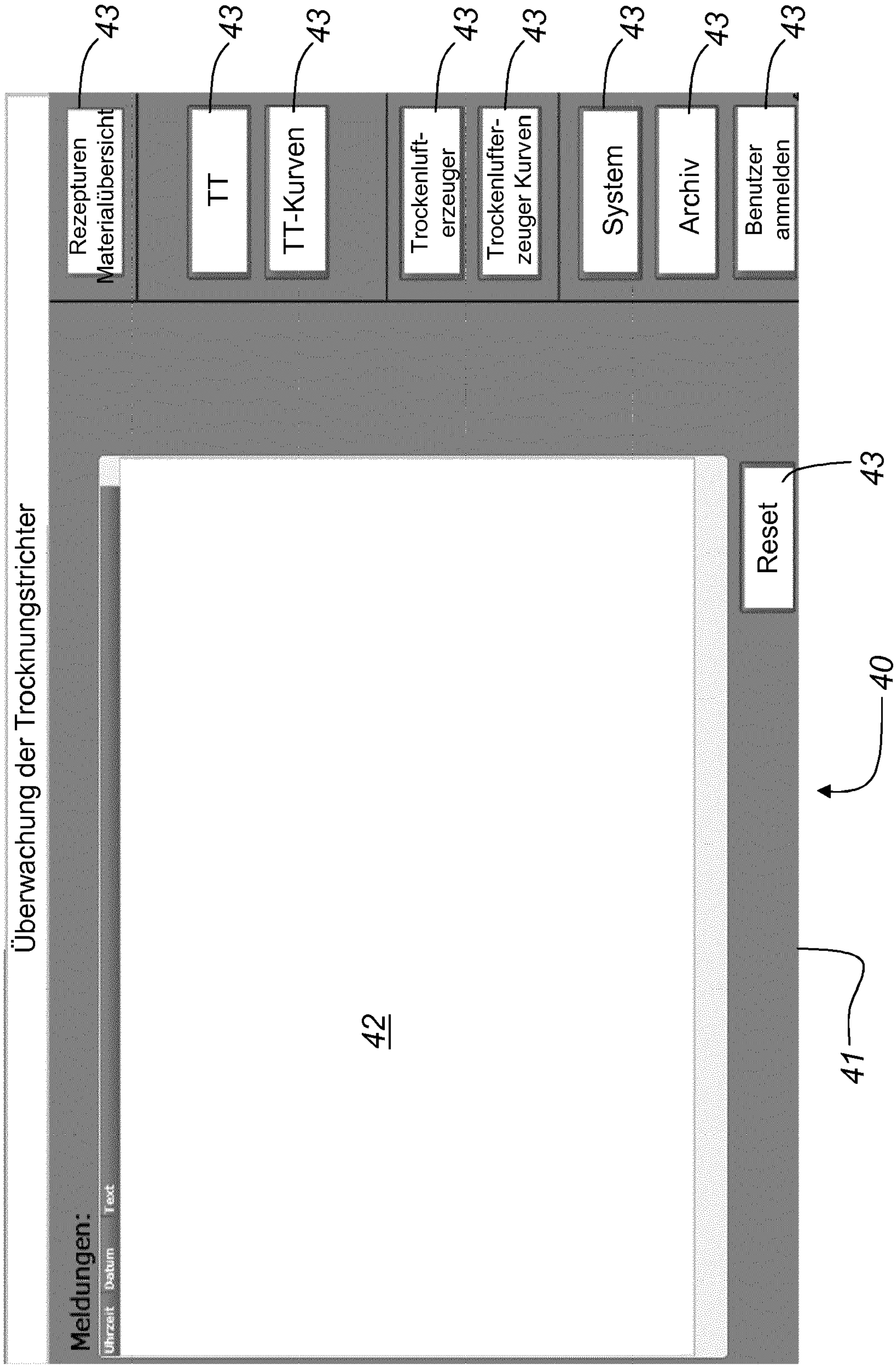
Überwachung der Trocknungstrichter
Meldungen:
Uhrzeit
Datum
Text
Rezepturen Materialübersicht
TT
TT-Kurven
Trockenluft-erzeuger
Trockenlufter-zeuger Kurven
System
Archiv
Benutzer anmelden
Reset
42
43
40
41

Fig. 6

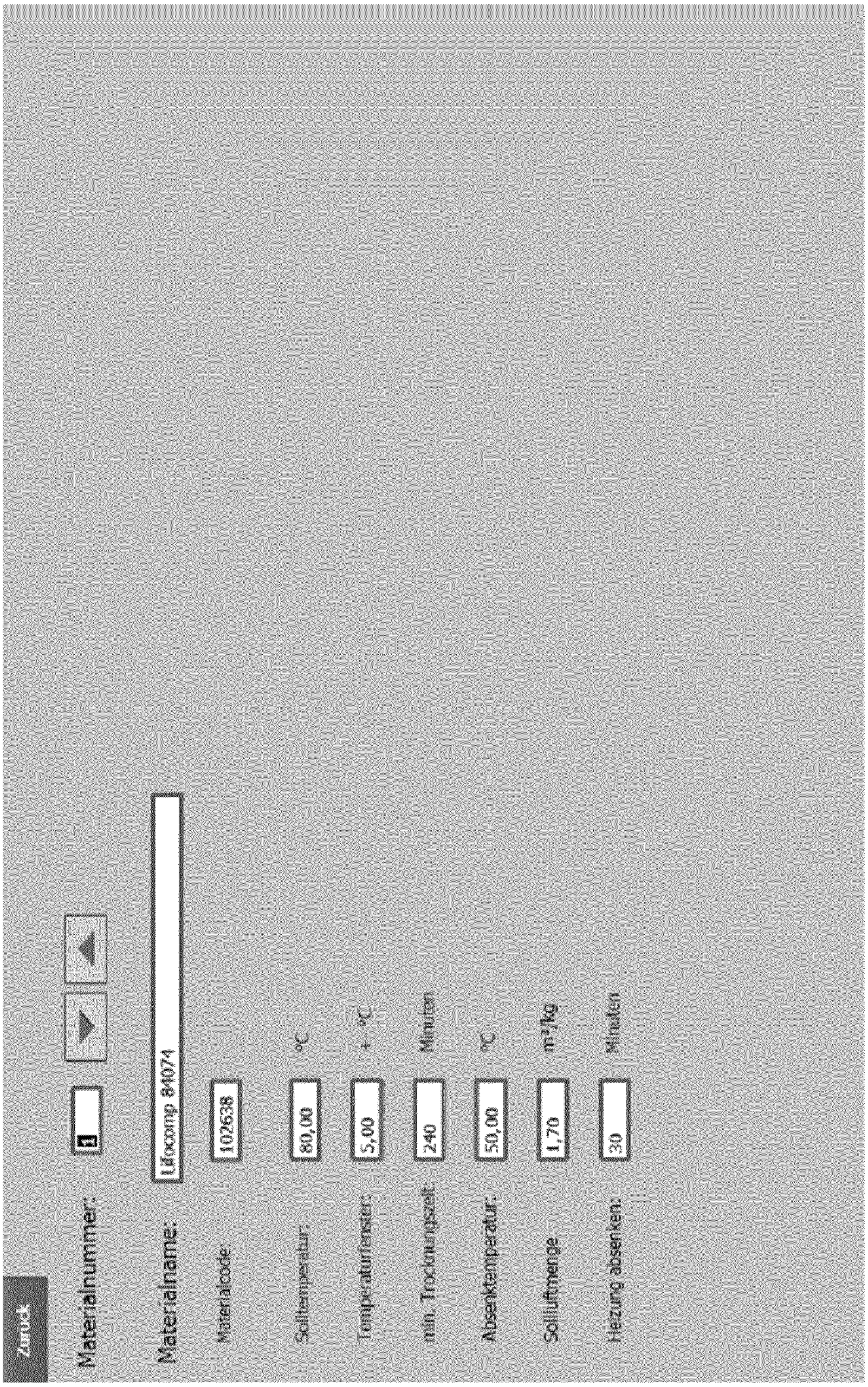
Zurück
Materialnummer: 1
Materialname: Lifocomp 84074
Materialcode: 102638
Solltemperatur: 80,00 °C
Temperaturfenster: 5,00 + °C
min. Trocknungszeit: 240 Minuten
Absenktemperatur: 50,00 °C
Sollluftmenge 1,70 $m^3/kg$
Heizung absenken: 30 Minuten
50

Fig. 7

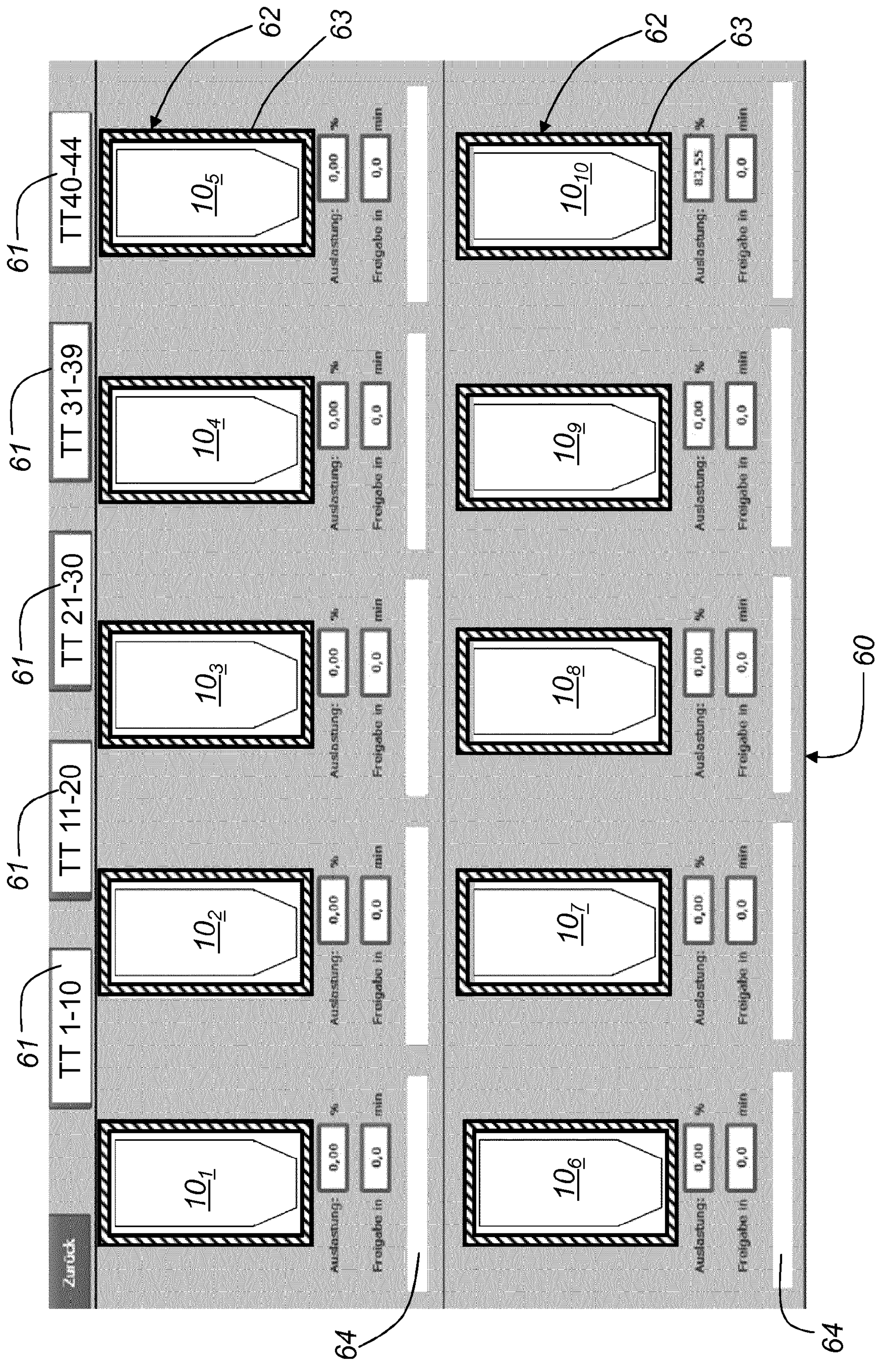
61
TT 1-10
TT 11-20
TT 21-30
TT 31-39
TT40-44
62
63
Zurück
10_1
10_2
10_3
10_4
10_5
10_6
10_7
10_8
10_9
10_10
Auslastung:
Freigabe in
%
min
0,00
83,55
0,0
60
64

Fig. 8

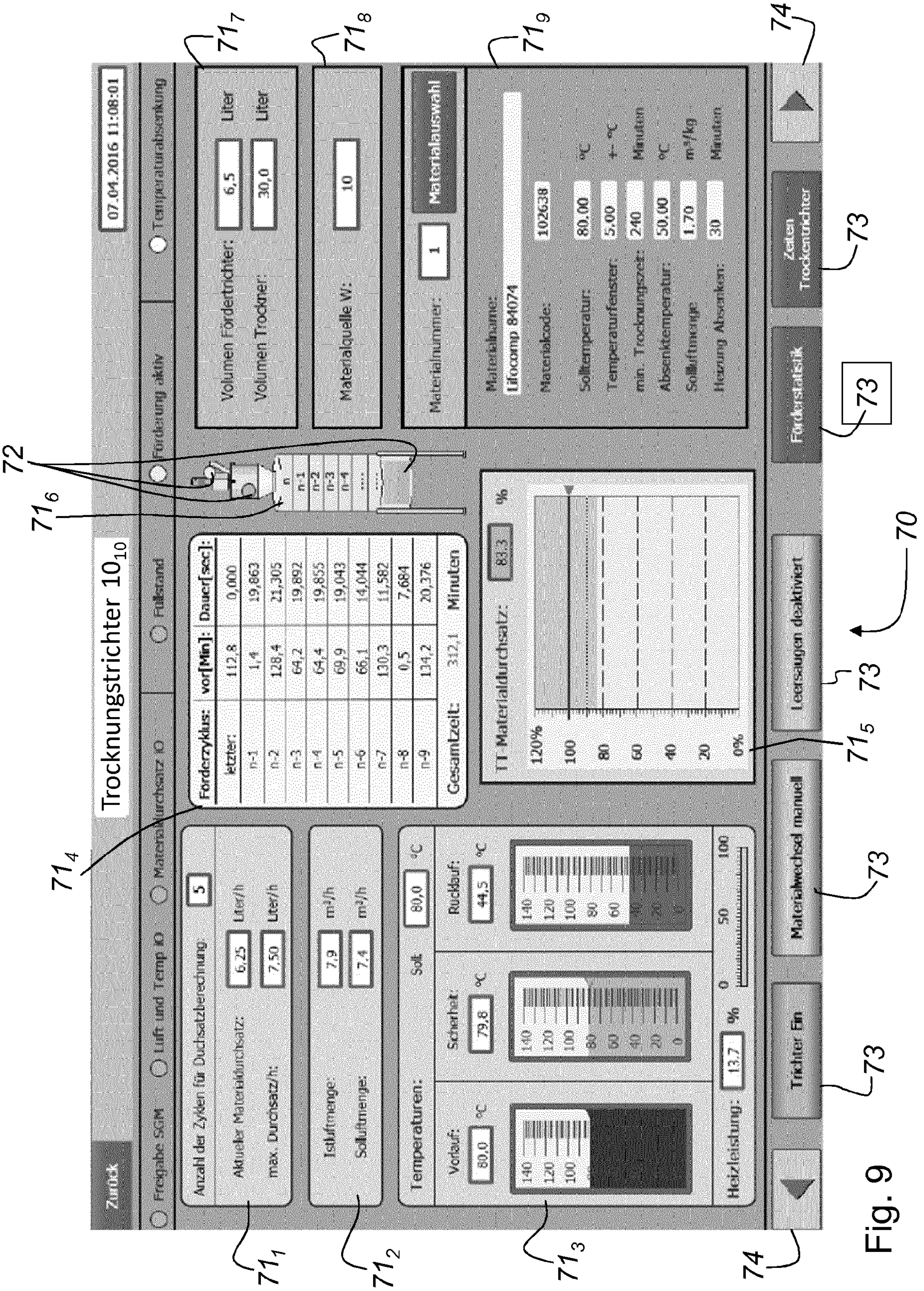
Trocknungstrichter 10$_{10}$
07.04.2016 11:08:01
Zurück
Freigabe SGM
Luft und Temp IO
Materialdurchsatz IO
Füllstand
Förderung aktiv
Temperaturabsenkung
Anzahl der Zyklen für Durchsatzberechnung: 5
Aktueller Materialdurchsatz: 6,25 Liter/h
max. Durchsatz/h: 7,50 Liter/h
Istluftmenge: 7,9 m³/h
Sollluftmenge: 7,4 m³/h
Temperaturen: Soll: 80,0 °C
Vorlauf: 80,0 °C
Sicherheit: 79,8 °C
Rücklauf: 44,5 °C
Heizleistung: 13,7 %
Förderzyklus: | vor[Min]: | Dauer[sec]:
letzter: | 112,8 | 0,000
n-1 | 1,4 | 19,863
n-2 | 128,4 | 21,305
n-3 | 64,2 | 19,892
n-4 | 64,4 | 19,855
n-5 | 69,9 | 19,043
n-6 | 66,1 | 14,044
n-7 | 130,3 | 11,582
n-8 | 0,5 | 7,684
n-9 | 134,2 | 20,376
Gesamtzeit: 312,1 Minuten
TT-Materialdurchsatz: 88,3 %
Volumen Fördertrichter: 6,5 Liter
Volumen Trockner: 30,0 Liter
Materialquelle W: 10
Materialnummer: 1
Materialauswahl
Materialname: Lifocomp 84074
Materialcode: 102638
Solltemperatur: 80,00 °C
Temperaturfenster: 5,00 +-°C
min. Trocknungszeit: 240 Minuten
Absenktemperatur: 50,00 °C
Sollluftmenge: 1,70 m³/kg
Heizung Absenken: 30 Minuten
Trichter Ein
Materialwechsel manuell
Leersaugen deaktiviert
Förderstatistik
Zeiten Trockentrichter
70
71$_1$
71$_2$
71$_3$
71$_4$
71$_5$
71$_6$
71$_7$
71$_8$
71$_9$
72
73
74

Fig. 9

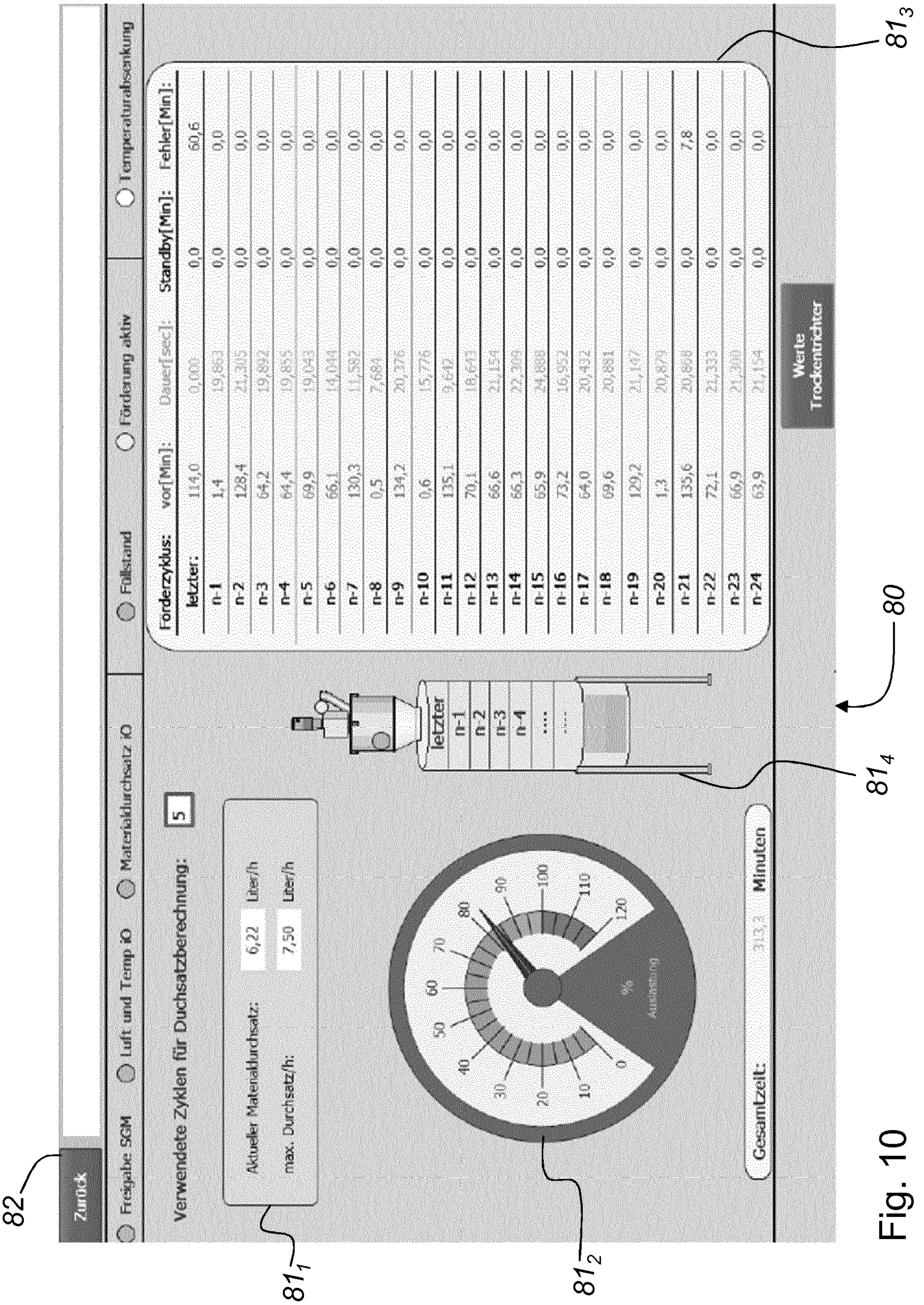

82
Zurück
Freigabe SGM
Luft und Temp iO
Materialdurchsatz iO
Füllstand
Förderung aktiv
Temperaturabsenkung
Verwendete Zyklen für Duchsatzberechnung:
5
Aktueller Materialdurchsatz:
6,22
Liter/h
max. Durchsatz/h:
7,50
Liter/h
%
Auslastung
0
10
20
30
40
50
60
70
80
90
100
110
120
Gesamtzeit:
313,3
Minuten
letzter
n-1
n-2
n-3
n-4
Förderzyklus: | vor[Min]: | Dauer[sec]: | Standby[Min]: | Fehler[Min]:
letzter: | 114,0 | 0,000 | 0,0 | 60,6
n-1 | 1,4 | 19,863 | 0,0 | 0,0
n-2 | 128,4 | 21,305 | 0,0 | 0,0
n-3 | 64,2 | 19,892 | 0,0 | 0,0
n-4 | 64,4 | 19,855 | 0,0 | 0,0
n-5 | 69,9 | 19,043 | 0,0 | 0,0
n-6 | 66,1 | 14,044 | 0,0 | 0,0
n-7 | 130,3 | 11,582 | 0,0 | 0,0
n-8 | 0,5 | 7,684 | 0,0 | 0,0
n-9 | 134,2 | 20,376 | 0,0 | 0,0
n-10 | 0,6 | 15,776 | 0,0 | 0,0
n-11 | 135,1 | 9,642 | 0,0 | 0,0
n-12 | 70,1 | 18,643 | 0,0 | 0,0
n-13 | 66,6 | 21,154 | 0,0 | 0,0
n-14 | 66,3 | 22,309 | 0,0 | 0,0
n-15 | 65,9 | 24,888 | 0,0 | 0,0
n-16 | 73,2 | 16,952 | 0,0 | 0,0
n-17 | 64,0 | 20,432 | 0,0 | 0,0
n-18 | 69,6 | 20,881 | 0,0 | 0,0
n-19 | 129,2 | 21,147 | 0,0 | 0,0
n-20 | 1,3 | 20,879 | 0,0 | 0,0
n-21 | 135,6 | 20,868 | 0,0 | 7,8
n-22 | 72,1 | 21,333 | 0,0 | 0,0
n-23 | 66,9 | 21,300 | 0,0 | 0,0
n-24 | 63,9 | 21,154 | 0,0 | 0,0
Werte Trockentrichter
$81_1$
$81_2$
$81_3$
$81_4$
80


Fig. 10

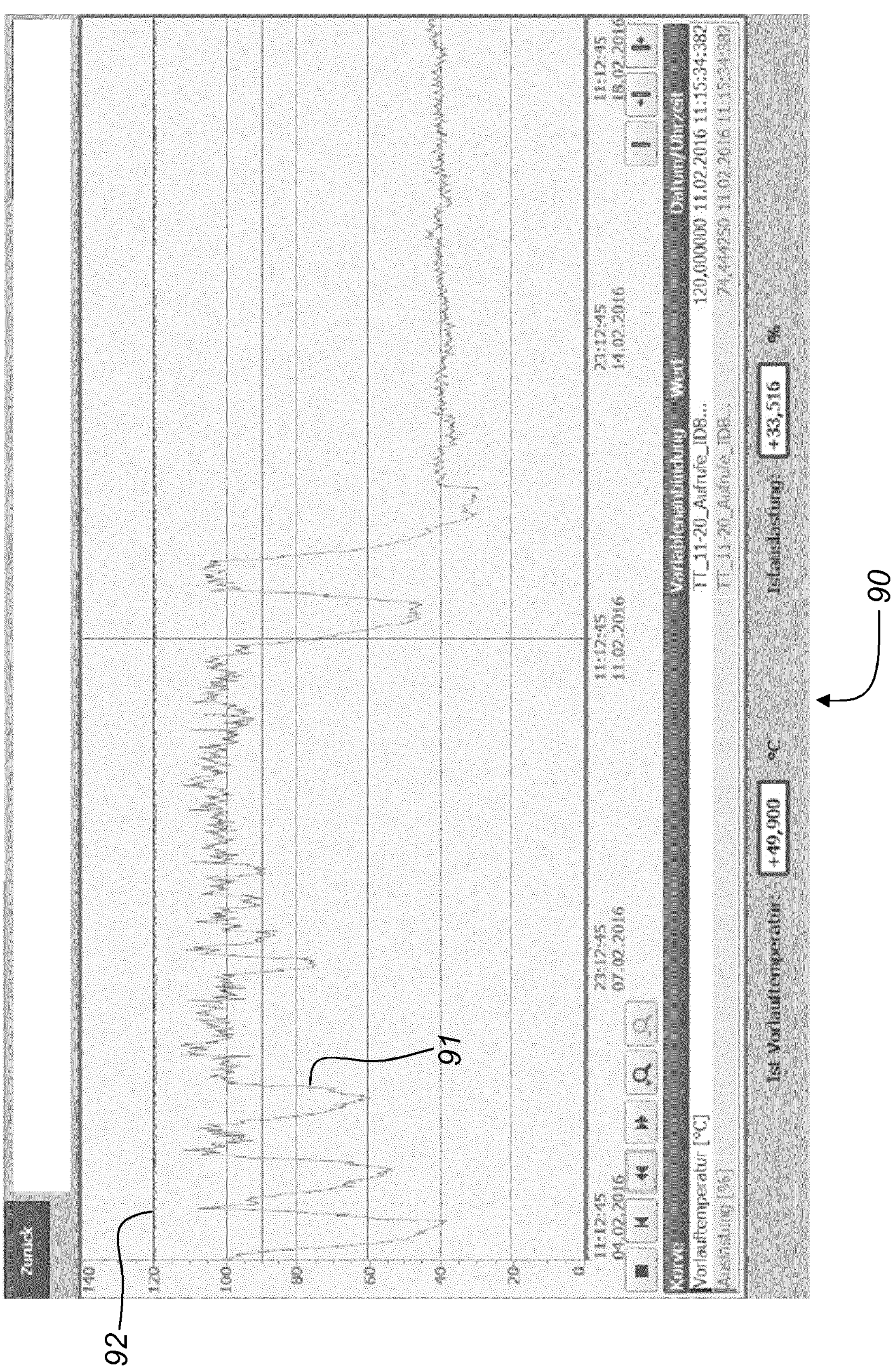
Zurück
140
120
100
80
60
40
20
0
11:12:45 04.02.2016
23:12:45 07.02.2016
11:12:45 11.02.2016
23:12:45 14.02.2016
11:12:45 18.02.2016
Kurve
Variablenanbindung
Wert
Datum/Uhrzeit
Vorlauftemperatur [°C]
TT_11-20_Aufrufe_IDB...
120,000000 11.02.2016 11:15:34:382
Auslastung [%]
TT_11-20_Aufrufe_IDB...
74,444250 11.02.2016 11:15:34:382
Ist Vorlauftemperatur:
+49,900
°C
Istauslastung:
+33,516
%
90
91
92

Fig. 11

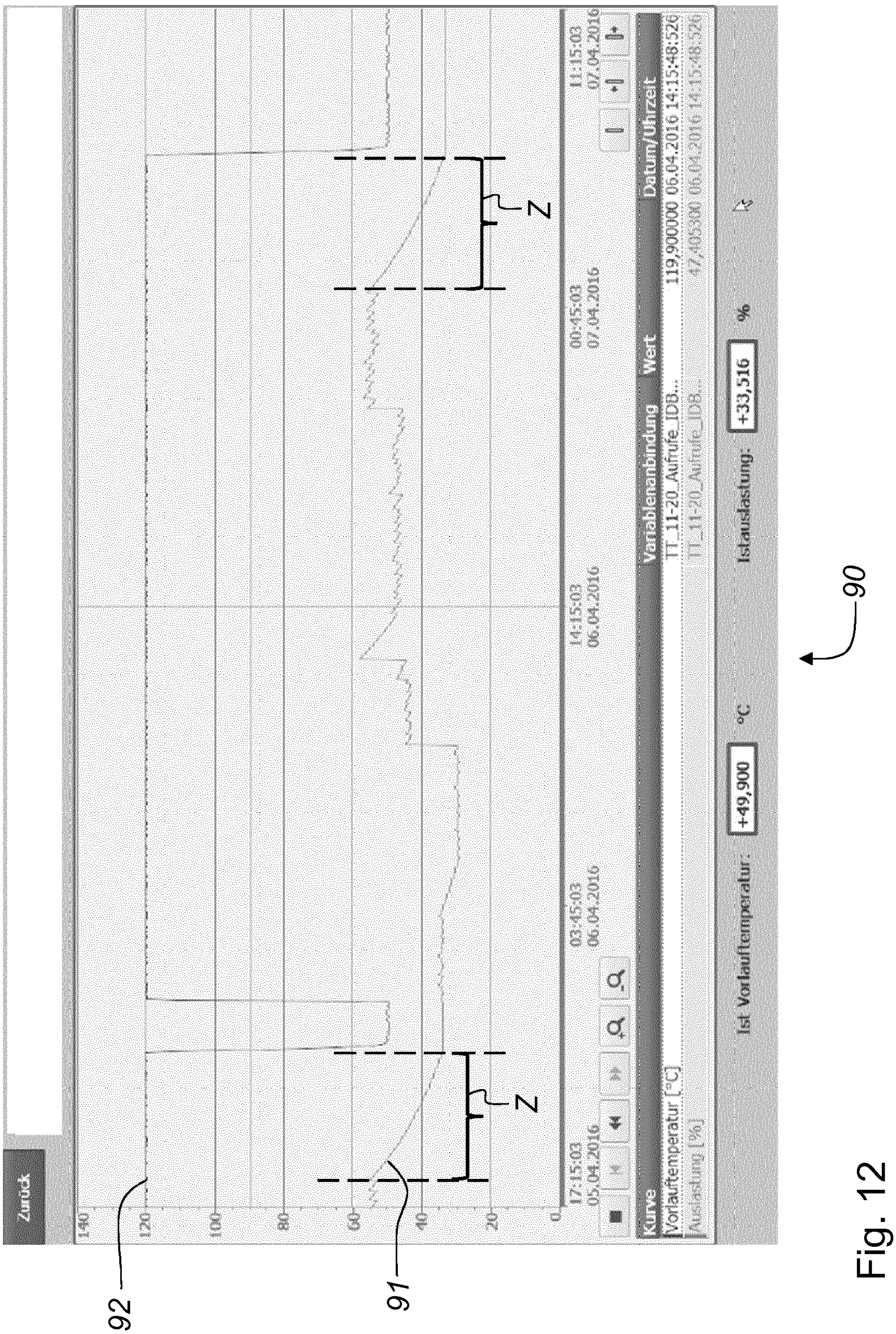
Zurück
140
120
100
80
60
40
20
0
17:15:03
05.04.2016
03:45:03
06.04.2016
14:15:03
06.04.2016
00:45:03
07.04.2016
11:15:03
07.04.2016
Kurve
Variablenanbindung
Wert
Datum/Uhrzeit
Vorlauftemperatur [°C]
TT_11-20_Aufrufe_IDB...
119,900000
06.04.2016 14:15:48:526
Auslastung [%]
TT_11-20_Aufrufe_IDB...
47,405300
06.04.2016 14:15:48:526
Ist Vorlauftemperatur:
+49,900
°C
Istauslastung:
+33,516
%
Z
Z
90
91
92

Fig. 12

Europäisches Patentamt
European Patent Office
Office européen des brevets

# EUROPÄISCHER RECHERCHENBERICHT

Nummer der Anmeldung
EP 16 17 4566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | OPI SYSTEMS: "Advanced Grain Management", INTERNET CITATION, 2011, Seiten 1-5,22, XP002714203, Gefunden im Internet: URL:http://www.sirajsons.pk/OPI-Integris%20Presentation.pdf [gefunden am 2013-10-04] * Seiten 32-67 * | 1-7 | INV. F26B3/06 F26B17/12 F26B21/06 B29B13/06 |
| X | US 2006/168843 A1 (ZLOTOS MICHAEL [DE]) 3. August 2006 (2006-08-03) * Abbildungen 1-3 * * Absätze [0080] - [0114] * * Anspruch 14 * | 8-15 | |
| A | DE 39 26 689 A1 (SIMAR FOERDERTECHNIK GMBH [DE]) 14. Februar 1991 (1991-02-14) * Abbildung 1 * * Seite 1 * | 1-15 | |
| A | EP 2 447 027 A1 (PLASTIC SYSTEMS S P A [IT]) 2. Mai 2012 (2012-05-02) * Abbildung 1 * * Absätze [0039] - [0052] * | 1-15 | RECHERCHIERTE SACHGEBIETE (IPC): F26B B29B |

Der vorliegende Recherchenbericht wurde für alle Patentansprüche erstellt

1

| Recherchenort | Abschlußdatum der Recherche | Prüfer |
|---|---|---|
| Den Haag | 16. Dezember 2016 | De Meester, Reni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 17 4566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2016

| Im Recherchenbericht angeführtes Patentdokument | Datum der Veröffentlichung | Mitglied(er) der Patentfamilie | Datum der Veröffentlichung |
|---|---|---|---|
| US 2006168843 A1 | 03-08-2006 | KEINE | |
| DE 3926689 A1 | 14-02-1991 | KEINE | |
| EP 2447027 A1 | 02-05-2012 | EP 2447027 A1<br>IT 1402599 B1 | 02-05-2012<br>13-09-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19719483 A1
- DE 3929858 A1
- EP 2186613 A